(19) Europäisches Patentamt
European Patent Office
Office européen des brevets

(11) EP 4 012 655 B1

(12) **EUROPEAN PATENT SPECIFICATION**

(45) Date of publication and mention
of the grant of the patent:
**28.01.2026 Bulletin 2026/05**

(21) Application number: **20212882.3**

(22) Date of filing: **09.12.2020**

(51) International Patent Classification (IPC):
**G06T 7/73** (2017.01)    **G06T 7/33** (2017.01)

(52) Cooperative Patent Classification (CPC):
**G06T 7/73; G06T 7/33; G06T 7/74;** G06T 2200/04;
G06T 2207/10016; G06T 2207/10028;
G06T 2207/20076; G06T 2207/30244;
G06T 2207/30252

(54) **POSITIONING SYSTEM AND METHOD FOR DETERMINING THE THREE-DIMENSIONAL POSITION OF A MOVABLE OBJECT**

POSITIONIERUNGSSYSTEM UND VERFAHREN ZUR BESTIMMUNG DER DREIDIMENSIONALEN POSITION EINES BEWEGLICHEN OBJEKTS

SYSTÈME DE POSITIONNEMENT ET MÉTHODE POUR DÉTERMINER LA POSITION TRIDIMENSIONNELLE D'UN OBJET MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2022 Bulletin 2022/24**

(73) Proprietor: **Baric, Martina**
**88340 Grude (BA)**

(72) Inventor: **Baric, Martina**
**88340 Grude (BA)**

(74) Representative: **Meissner Bolte Düsseldorf**
**Patentanwälte Rechtsanwälte**
**Partnerschaft mbB**
**Kaiserswerther Straße 183**
**40474 Düsseldorf (DE)**

(56) References cited:
**EP-A1- 3 343 431**      **WO-A1-2018/145291**
**WO-A2-2004/059900**

- CLEMENS ARTH ET AL: "Exploiting sensors on mobile phones to improve wide-area localization", PATTERN RECOGNITION (ICPR), 2012 21ST INTERNATIONAL CONFERENCE ON, IEEE, 11 November 2012 (2012-11-11), pages 2152 - 2156, XP032329775, ISBN: 978-1-4673-2216-4
- YUANBIN WANG ET AL: "Projective reconstruction of seven 3D points from two uncalibrated images", FUTURE COMPUTER AND COMMUNICATION (ICFCC), 2010 2ND INTERNATIONAL CONFERENCE ON, IEEE, PISCATAWAY, NJ, USA, 21 May 2010 (2010-05-21), pages V1 - 659, XP031699100, ISBN: 978-1-4244-5821-9

**Description**

The present invention relates to a positioning system and a method for determining the three-dimensional position of a movable object according to the subject-matter of claims 1 and 15.

The determination of the three-dimensional position of a movable object is a highly relevant task in many different technical fields. A prominent example for a technical field in which reliable positioning systems are warranted is the field of autonomous driving. In order to make the most informed decisions possible, a self-driving vehicle must know its position and orientation at all times. A classical approach for the determination of an object's, e.g. a vehicle's, position is based in the use of wheel odometry. However, wheel odometry is unreliable for use during prolonged periods of time because occasional wheel slippage causes position miscalculations and the system must be reset frequently. Another approach is based on the use of geo-positioning systems such as GPS. These systems still suffer from unsatisfactory spatial resolutions and are not suitable for indoor use such as for vehicles used in warehouses.

With the rise in computing power, positioning systems that rely on machine vision become increasingly appealing. Camera based positioning systems promise precision and versatility.

Camera based positioning systems perform the determination of an object's position by processing images captured by a camera that is rigidly attached to the object to be located. By processing the captured images, the position of the camera in 3D space can be determined, as well as the orientation of the camera in 3D space. Since the position and orientation of the camera relative to the object to be located is fixated due to the rigid attachment, and, thus, known, the three-dimensional position of the object can be readily inferred from the determined position of the camera. An example system is described in patent publication WO2018/145291 A1.

Camera based positioning systems are widely used to determine the position and orientation of a film camera. The automatic determination of a film camera's pose, i.e., its position and orientation, is an essential task in the field of augmented and virtual reality. When the film camera's pose is precisely known, this data can be used by a graphics engine in order to render virtual graphics realistically and overlay them with the image data recorded by the film camera. For the graphics to appear realistic, the graphics, lights and shadows must be rendered in the correct perspective. So, for each miniscule movement of the film camera, the render engine takes in the updated pose of the film camera determined by the positioning system and adjusts the graphics rendering to account for that movement.

Determining the position and/or orientation of an object such as a film camera by processing images captured with the camera of a positioning system can be done by various methods.

A field of commonly employed methods is referred to as SLAM (Simultaneous Localization and Mapping) in the literature. With this approach, the positioning system builds and/or updates a map of its initially unknown surroundings whilst simultaneously keeping track of its position within the surroundings. With this approach, the positioning system automatically detects visual features of the surroundings that are captured by the camera of the positioning system and determines and stores the 3D positions of the detected visual features in a 3D model that contains information on the 3D position of the visual features. These stored 3D positions can then be used to determine the location of the camera.

The 3D model may be created, for example, via the use of standard "Structure from Motion" techniques.

A seminal piece of work in this field that describes implementations of a SLAM algorithm is Andrew J. Davison's publication of 2003: "Real-Time Simultaneous Localisation and Mapping with a Single Camera" (DOI 10.1109/ICCV.2003.1238654). Further reference may be made to H. Durrant-Whyte e.a., "Simultaneous localization and mapping: part I" (DOI: 10.1109/MRA.2006.1638022) and T. Bailey, "Simultaneous localization and mapping (SLAM): part II" (DOI: 10.1109/MRA.2006.1678144). In the SLAM literature, a visual feature stored in the computer model is frequently referred to as a "landmark". The computer or 3D model of the visual features in which the landmarks are stored is also referred to as "map" in the literature, and the process of creating it is called "mapping".

SLAM algorithms are tailored to the available resources, hence not aimed at perfection, but at operational compliance. Published approaches are employed in self-driving cars, unmanned aerial vehicles, autonomous underwater vehicles, planetary rovers, and in the field of robotics.

One pivotal advantage of SLAM-based positioning systems is that they do not experience drift because the 3D model of the visual features, i.e., the map, "anchors" the position and orientation of the camera relative to the known 3D positions of the visual features.

SLAM-based approaches do, however, require considerable time and resources to map the camera's surroundings. Once a map is created, it can be used on multiple occasions even after the positioning system has been shut down for an extended period of time. If being restarted after an extended period of time, an initial determination of the system's position is required, i.e., the positioning system must determine the position of its camera relative to the visual features contained in an image captured by the camera. In order to achieve this, the positioning system must establish correspondence between the visual features detected by its camera and the landmarks in the 3D model.

The landmarks in the computer model are stored in a distinguishable manner from each other, e.g. by assigning unique IDs to each landmark. The computer model stores a position in 3D space for each landmark. Usually, visual SLAM systems use visual features that are distinct one from another. The computer model can, therefore, store information about the visual features that facilitates the later recognition of that feature in the camera images. However, when the visual features are fairly similar to one another or in situations of poor lighting, there might not be enough reliable information to store about an individual visual feature that will make it recognizable among the other visual features. In such situations, the relative positions of visual features to one another is what facilitates identification of individual features, similar to identifying barely visible stars in the sky by looking at their position relative to the other stars.

In a given positioning system, the computer model contains N landmarks in total. The camera of the positioning system is able to detect M visual features in one frame, where it is usually the case that N≥M. The task of establishing correspondence between the M visual features detected in an image and the corresponding landmarks in the computer model yields a combinatorial problem with number of combinations being $C = \frac{N!}{(N-M)!}$.

In SLAM systems, this task proves to be particularly difficult when the positioning system is started after being switched off for an unknown period of time. The system is unaware what movement the camera has undergone while the system has been switched off. The problem may also occur while the positioning system is active but the camera's vision is obstructed for an extended period of time. From the above considerations, it is evident that a need for robust yet efficient means to determine the system's location exists, in order to enable the positioning system to quickly and reliably return to determining its position based on the stored 3D model even after being inactive for an extended period of time.

A common approach to the above problem is to represent detected visual features and landmarks as 2D and 3D points respectively and attempt to find correspondences between them. Most work in finding correspondences between sets of points uses a variant of the Iterative Closest Point (ICP) algorithm, an algorithm that is known to produce suboptimal results in many real-world examples.

Gu et al. "A Quick 3D-to-2D Points Matching based on the Perspective Projection" (DOI: 10.1007/978-3-540-89639-5_61) describes algorithms for matching 3D points to 2D points by computing convex hulls of both 3D point set and the 2D point set and dividing each set of points into boundary and interior points, thus simplifying the search for matches. This approach is not applicable when the set of 2D points corresponds to only a subset of a larger 3D point set and thus inherently unsuitable in typical SLAM scenarios, when the camera only captures a fraction of the visual features stored in the computer model.

Gold et al. "New algorithms for 2D and 3D point matching: Pose Estimation and Correspondence" (DOI: 10.1016/s0031-3203(98)80010-1) turns this inherently discrete problem of finding matches between pairs of features into a continuous one and then uses various optimization techniques to find the global optimum. This approach imposes a considerable computational demand on the SLAM system.

In light of the above, it is an object of the present invention to provide an improved solution to the problem of determining the three-dimensional position of an object with a camera based positioning system that is configured to establish the position of an object based on a stored computer model or 3D map of visual features. In particular, it is an object of the present invention to enable a camera based positioning system to determine the location of the camera (and/or an object attached thereto) even under circumstances in which the positioning system is not able to identify the visual features captured by the camera. Herein, it is desired that the improved solution exhibits a feasible trade-off between robustness and required computational power.

The above object is solved by a positioning system according to the subject-matter of claim 1 and a method for determining the three-dimensional position of an object according to the subject-matter of claim 15. Preferred embodiments of the invention are defined by the subject-matter of the dependent claims.

Specifically, the present invention provides a positioning system for determining the three-dimensional position of a movable object, comprising a camera that is attachable to the object at a defined relative position and orientation, the camera being preferably rigidly attachable, to the object and is configured to capture an image containing image representations of at least a part of a plurality of visual features that are placeable at fixed locations spaced apart from the object and/or camera, storage means for storing a 3D model of the plurality of visual features, the 3D model comprising a set of landmarks for the visual features, preferably a set of landmarks with one landmark for each visual feature, the landmarks containing information on the three-dimensional position of the corresponding visual feature, and computing means that are configured to:

- detect the positions of image representations of the visual features in the captured image as image positions of the visual features;
- perform an estimation of the orientation of the camera;
- define a virtual image plane, based on the estimation of the orientation of the camera;
- project the three-dimensional positions of at least a part of the visual features stored in the 3D model onto the virtual image plane to create projected positions of the visual features;
- perform matching between the image positions of the visual features and the projected positions of the visual features to identify the visual features captured in the image;
- determine the three-dimensional position and/or orientation of the object based on the information on the three-dimensional positions of the visual features identified in the matching process.

It is one characteristic element of the present invention that the camera positioning system is able to establish correspondence between the visual features detected in a camera image and three-dimensional positions of the visual features or landmarks stored in the 3D model, even after the camera lost vision for an extended period of time or the system has been shut down prior to use.

The invention achieves this by the use of a novel, efficient method that is based on the insight that the establishment of correspondence between the visual features detected in an image of the camera, which are image positions and thus inherently two-dimensional (or 2D), and the three-dimensional (or 3D) positions of the visual features stored in the landmarks in the 3D model is facilitated by generating a 2D projection of the stored 3D positions of the visual features. The matching between the image positions and the projected positions that is required for establishing correspondence and identifying the visual features captured in the image may then be performed by employing a suitable pattern matching method that is configured to match the set of 2D image positions with the set of 2D projected positions.

An "image plane" is a concept well known in the art. In most cases, the "image plane" implies both a 3D plane and a 3D point representing the optical/projection center of the camera, wherein a 3D ray that goes from the optical/projection center and is orthogonal to said 3D plane represents the direction where the camera is looking. This applies to the definition of the camera's actual image plane (i.e. the plane which is represented by the image captured by the camera, from which image positions are derived), as well as to the virtual image plane. In some cases, particularly when orthographic projections are being used (see below), the virtual image plane may imply only a 3D plane without a 3D point representing an optical/projection center.

The performance of the matching process is dependent on the 2D projection of the 3D positions of the visual features stored in the 3D model. In principle, there is an infinite number of virtual image planes on which the 3D positions of the visual features stored in the 3D model may be projected. A feasible matching depends on the combination of a meaningful choice of the virtual image plane onto which the 3D positions of the visual features stored in the 3D model are projected, and a robust matching procedure.

If, for example, it was possible to use the actual image plane of the camera as the virtual image plane for the projection, the image positions of the visual features captured in the image of the camera could produce a perfect match with a subset of the projected positions that correspond to the visual features captured in the image. With increasing deviation between the virtual image plane and the image plane of the camera, matching is exacerbated.

For this reason, the computing means of the positioning system are configured to perform an estimation of the orientation of the camera, and to preferably base the definition of the virtual image plane on this estimation. By estimating the orientation of the camera, constraints are imposed on the choice of the virtual image plane by excluding virtual image planes that would not be suitable to perform successful matching between image positions and projected positions. Thus, the estimation of the camera's orientation may be utilized to effectively reduce the possible choices for the definition of the virtual image plane.

The matching process between image positions and projected positions should be robust against a non-identical distribution of image positions and projected positions that would be obtained when the virtual image plane perfectly coincides with the image plane of the camera. The combination of a suitable definition of the virtual image plane with a robust matching process enables a determination of the position of the camera and the object attached thereto with high computational efficiency and reliability.

In other words: In order to determine the position of the object, the positioning system is configured to find correspondences between landmarks in a 3D model of visual features and image positions of the visual features captured in an image of the camera. The positioning system is configured to generate 2D projected positions from at least some of the landmarks. After estimating a camera orientation (and, in some cases, preferably, a camera position, wherein the combination of camera orientation and position is denoted as camera pose), a virtual image plane is defined and a landmark from the 3D model can be projected onto the virtual image plane. This corresponds to asking the following question: "If a camera is in a given pose (or orientation), where in the image would it detect a given 3D point?" In the context of this invention, the position in the image where the image representation of a visual feature would be expected corresponds to the projected position, i.e., the 2D position calculated from a 3D position stored in the 3D model that is projected onto the virtual image plane.

Since the camera's actual orientation is unknown, the estimation of the camera's orientation used in this question - on which the definition of the virtual image plane is based - may be designated as a hypothesis. Without restrictions, the number of hypotheses is virtually unlimited.

According to the invention, the computing means are configured to estimate the orientation of the camera, thus providing means to reduce the number of hypotheses. Based on the reduced number of hypotheses, the system according to the invention performs matching between two sets of 2D positions, i.e., image positions and projected positions for the remaining hypotheses. Upon finding a match, the system is able to resume with precise positioning.

If matching is unsuccessful, the computing means may be configured to repeat some or all steps of the position determination process. For example, if matching is unsuccessful after a predetermined time or number of matching steps, the computing means may be configured to define a new virtual image plane, optionally based on a new estimation of the orientation of the camera, and generate a new projection of the visual features onto the new virtual image plane. Afterwards, matching between the image positions and the new projected positions may be performed.

The estimation of the orientation of the camera may be performed in different ways, depending on available information about the camera's orientation. For example, the estimation may be performed by imposing constraints on the camera's orientation, e.g. by prompting a user of the positioning system to orient the camera in an essentially vertically upward or downward direction. According to a further example, the estimation of the camera's orientation may be performed by prompting the user to place the object on a mechanical support that provides a predetermined orientation for the object and the camera attached thereto. This yields an approximate orientation of the camera, on which the definition of the virtual image plane may be based.

The estimated orientation of the camera may be expressed by a vector pointing from the camera in the direction of the center of the camera's field of view (i.e., the optical axis of the camera). The virtual image plane may be defined as a plane perpendicular to the (estimated) optical axis of the camera. The position and orientation of the camera's image plane relative to the camera, i.e. the plane on which the optical system of the camera projects the captured environment, is known. The definition of the virtual image plane based on the estimated orientation of the camera may thus be chosen to coincide with the image plane of the camera at the estimated orientation. The present invention is, however, not limited to such definitions of the virtual image plane. In some cases, other definitions of the virtual image plane may be more suitable to achieve an efficient matching process, as will be elaborated later.

Once a correspondence between image positions and projected positions has been established by the matching process, the position of the camera can be determined based on the three-dimensional positions of the identified visual features that are stored in the 3D model. Since the position and orientation of the camera relative to the object are known, the position of the object can be readily determined from the determined position (and orientation) of the camera. For the determination of the object's position, only one image captured by the camera of the positioning system is required. Optionally, if the positioning system fails to find a correspondence between image positions and projected positions, the positioning system can repeat the described procedure on any subsequent image captured by the camera. The time period between two successive camera images is considered to be short. The correspondence between the detected visual feature representations in a newly captured camera image and the detected visual feature representations in the previous captured camera image is easily determinable considering that the two successive camera images are expected to look fairly similar. Hence, in the case of failure to complete the matching process using one camera image, the present invention can optionally use subsequent camera images in an optimized way: only the visual feature representations detected in the new camera image that weren't detected in the previous camera image are attempted to be matched with the landmarks from the 3D model.

The object whose position is to be determined is not particularly limited, as long as the camera of the positioning system is rigidly attachable to the object, or as long as the position and orientation of the object relative to the camera is determinable at any point in time. This ensures a well-defined positional (and rotational) relation between camera and object, so that the position of the object can be readily inferred from the position (and orientation) of the camera that is determined with the positioning system. The object can also be the camera of the positioning system itself (in which case said positional and rotational relations are both zero).

In the context of the present invention, the term "landmark" is used in the conventional way, i.e. a landmark is the representation of a visual feature as stored in a 3D computer model such as the 3D model of the present invention. A landmark contains, at least, information relating to the three-dimensional position of the corresponding visual feature.

The information on the three-dimensional positions of the visual features can comprise absolute positions that may, for example, be stored as Cartesian coordinates in the 3D model. This information is stored together with an identifier for each visual feature in order to be able to distinguish between and unambiguously identify the visual features. The information on the three-dimensional positions may further comprise positional error margins or probability distributions for each visual feature. The 3D model may be acquired by any means known in the art, e.g. by SLAM or via the use of standard "Structure from Motion" techniques.

In the context of the present invention, the term "visual feature" is to be understood as a part of the camera's (and object's) surroundings whose presence and location can be automatically detected in a camera image. A visual feature can be any salient part of the camera's environment. When a visual feature is captured by the camera, it is represented by a discernible area in the image. For example, a rectangular picture on a wall comprises at least four visual features, namely, the corners of the picture. Visual features need not be corners. In the example of the rectangular picture, the picture itself may also be defined as one visual feature. Visual feature image representations may take the form of blobs, circles, triangles, rectangles or any other shape that can be detected in an image. They can be natural (already in the environment) or artificial, e.g., in the form of visible markers that are placeable or placed at fixed locations spaced apart from the camera.

If the information on the three-dimensional positions of the visual features is provided as Cartesian coordinates in the landmarks, the corresponding visual feature needs to be idealized to a "point-based" feature. For this, a method of extracting point location from detected features in the captured images may be used. Such a method for extracting a point from a detected feature should be consistent in a way that the extracted points from multiple images of a single visual feature all correspond to the image representation of a single 3D point in real space, or to its close proximity.

For example, a corner can be recognized only when considering a group of connected pixels. But after the corner has been recognized, a 2D point location with real numbers for Cartesian coordinates can be extracted from the images in which the tip of that corner is represented. Similarly, a feature can be a blob, i.e. a discernable group of neighbouring pixels in an image of a somewhat convex shape. A 2D detected point location can be extracted from a blob by calculating a center pixel position of a closed area of pixels representing the blob whose brightness in the image exceeds a predetermined threshold, or by some other similar method. For the calculation of the center pixel position, the affected pixels may be weighted according to their brightness or another discernable property of the pixels in the image. Alternatively, the positions of the pixels constituting the blob may be averaged.

If the visual features have a noticeable size (for example, if the visual features contain markers of different size that are placeable or placed at fixed locations), information on the size of the visual features may also be contained in the landmarks. For example, if the visual features contain visual markers with an essentially circular shape, the landmarks may comprise information on the diameter of the visual markers. The positions of the visual features stored in the landmarks may indicate the geometrical center of such visual features.

In the context of the present invention, it is not decisive whether the landmarks contain point-based information on the positions of the visual features or a probability distribution, as described above. The precision of the information on the three-dimensional position of the visual features simply limits the maximum obtainable accuracy of the position determination.

The task of performing matching between the image positions of the visual features and the projected positions of the visual features may, in some embodiments, comprise identifying a 2D transformation consisting of rotation, translation and scaling which satisfies the following condition: There is a sufficient number of image positions that, when transformed by said transformation, overlap with the projected positions. Alternatively, matching may comprise finding a 2D transformation consisting of rotation, translation and scaling which satisfies the following condition: There is a sufficient number of projected positions that, when transformed by said transformation, overlap with the image positions. The requirement of overlap is not restricted to identical positions of the image positions and projected positions. For example, a given uncertainty in the mapping of the visual features when building the 3D model may be taken into account.

An overlap or match between image positions and projected positions may be assumed when, optionally after the determination and application of the above mentioned transformation, a sufficient number of corresponding pairs of projected positions and image positions can be identified, for which the projected position and the image position of the pair lie in close proximity to each other, e.g. when the distance between them does not exceed a predetermined threshold. In this case, it may be assumed that the image position and the projected position of the respective pairs correspond to the same visual feature. The predetermined threshold may be tweaked to yield either strict matching criteria (when a low threshold is selected) or loose matching criteria (when a higher threshold is selected). In other words: the predetermined threshold defines how similar the matched 2D patterns must be in order to be considered a match. Strict pattern matching can take a longer time to yield results, but the results will be more accurate and the system can operate in environments where features are distributed more uniformly. Loose pattern matching is liable to produce some incorrect matches, but it will be quicker and it can be more robust against imperfect initial estimates.

If the position information in the 3D model is provided as probability distribution, an overlap may be assumed when probability distributions of the projected positions (which are 2D probability distributions representative of the probability distributions in the 3D model) and image positions overlap.

The image positions may also be determined as probability distributions. If both the position information in the 3D model and the image positions are represented by probability distributions, an overlap may be assumed when the overlap between the probability distributions of projected positions and image positions exceeds a predetermined threshold, or if an overlap between the probability distributions is found.

If either of the projected positions or the image positions are represented by discrete values and the other as probability distributions, an overlap may be assumed if the discrete positions of image or projected positions lie within the probability distribution of the projected or image positions, or if a minimum distance of the discrete position to the probability distribution does not exceed a predetermined threshold (this corresponds to the criterion that the likelihood that the discrete position is represented by the probability distribution exceeds a predetermined threshold).

When the matching is completed, the visual features whose image representations are contained in the captured image can be identified. The position determination can then be seamlessly continued on the basis of the 3D model. An analysis of the upcoming images captured by the camera to enable position determination may be based on any suitable SLAM algorithm. Once the visual feature representations in a camera image are identified (matched with the landmarks in the 3D model), the process of identifying the visual feature representations in the upcoming camera images can be done in several ways. One possible way to identify visual feature representations in the upcoming camera images may be based on the conceptual approach underlying the present invention for identifying the visual feature representations before matching is completed successfully: Relying on the fact that successive camera images are captured within short time periods, it can be expected that the camera hasn't traversed much distance in that short time period. Therefore, the detected visual feature representations in the next camera image are expected to be located near the corresponding visual feature representations in the previous camera image. Alternatively, knowing the corresponding landmarks of detected visual feature representations in one image allows the camera's pose to be calculated based on the known 3D positions of these landmarks and the intrinsic properties of the camera. The calculated pose is expected either not to change drastically or to change in a predictable manner within a time period between two successive camera frames. Therefore, for the next camera image, the expected pose can be extrapolated based on the data in the previous image. The expected pose can be used to project the landmarks into a set of projected points. The set of projected points is expected to be highly relevant in the new camera image in the process of identifying the detected visual representations in the new camera image. Such projected points can be matched with the set of points corresponding to the detected visual representations in order to find pairs of detected and projected points that lie within close distance to each other.

Preferably, the computing means are configured to perform matching by a pairwise comparison of image positions and landmarks from the 3D model that are represented in the matching process by their respective projected positions. With a pairwise comparison, the maximum number of comparisons is $P \cdot I$, wherein P is the number of landmarks in the 3D model and, thus, the maximum number of projected positions that may be created, and I is the number of image positions in the captured image. By performing matching in a pairwise manner, an iterative procedure for the matching process can be provided, which enables a computationally efficient and straightforward approach.

The positioning system may base the definition of the virtual image plane and, thus, the projection of the 3D positions of the landmarks on the estimated orientation of the camera. An (estimated) position of the camera may also be implicitly taken into account by the pairwise matching process. If the positioning system is configured to perform matching by a pairwise comparison of image positions and landmarks (represented by projected positions), the choice of a pair of a landmark and an image position for the matching process partially determines the position of the camera, since the choice of a pair of a landmark (represented by a projected position) and an image position for the matching process is equivalent to the assumption that the landmark corresponds to the image position in the captured image.

In other words, according to the invention, the computing means are configured to estimate the orientation of the camera. For pairwise matching between image positions and projected positions, a landmark from the 3D model and a visual feature detected in the image are selected. Using this pair as a potential match, combined with the estimation of the camera's orientation, the computing means are configured to project the landmark positions onto the virtual image plane and to establish correspondence between the set of projected positions and the set of visual features detected in the camera image by performing the matching process. By attempting to match a landmark/projected position to an image position, an implicit estimation of the position of the camera is performed, since a landmark/projected position and an image position can only produce a match if the (implicitly estimated) position of the camera is such that the projected position of the landmark corresponds to the image position of the visual feature.

The projection of the position of the visual features stored in the 3D model onto the virtual image plane is preferably performed as perspective projection. For a perspective projection, the orientation and position of the virtual image plane are required, since the (estimated) camera's viewpoint is at a known location relative to that plane. As explained above, the orientation of the virtual image plane may be determined based on the estimated orientation of the camera, and the position is implicitly estimated by the pairwise comparison of landmarks/projected positions and image positions.

Alternatively, the projection may be performed as a parallel or orthographic projection. This has the advantage that no (implicit) assumption on the position of the camera is made, so that the generation of the projected positions needs to be performed only once. However, in this case, the matching process should be performed with comparably loose matching criteria, in order to account for expected deviations between the relative positions of the projected positions and the image positions that are captured by the camera and, thus, represent a perspective projection of the visual features captured in the image. If no distinction is made in the following, the perspective projection is preferred over the orthographic projection.

According to a preferred embodiment, the positioning system comprises orientation determining means, preferably a gyroscope, an accelerometer, a magnetometer and/or another inertial measurement unit. Preferably, the computing means are configured to perform the estimation of the orientation of the camera based on information obtained from the orientation determining means. The orientation determining means are preferably rigidly attached to the camera, and are configured to provide information on the orientation of the camera.

With the provision of orientation determining means, the accuracy of the estimation of the orientation of the camera may be improved. For example, if the camera of the positioning system loses vision for a period of time, a gyroscope, accelerometer magnetometer and/or any other inertial measurement unit may be used to estimate the camera's orientation by integrating the camera's angular velocity during the time the camera lost vision. Based on the integrated angular velocity and the orientation before the camera lost vision, the orientation of the camera can be estimated.

Further preferably, the orientation determining means may be configured to provide an estimation of the camera's orientation relative to an absolute orientation, e.g. the direction of gravity or another fixed orientation. For example, the orientation determining means may comprise an accelerometer at a known orientation relative to the camera (e.g. by rigid attachment of the orientation determining means to the camera). When the camera is resting, the accelerometer may be used to determine the direction of gravity relative to the camera. Based on this information, the orientation of the camera may be estimated.

It is further preferred that the computing means are configured to perform the matching between the image positions and the projected positions of the visual features based on descriptors of the image positions and the projected positions, wherein the computing means are preferably configured to compute the descriptor for an image/projected position based on the distribution of neighbouring image/projected positions.

Particularly when performing a pairwise comparison between image positions and projected positions, it is advantageous to take information on the distribution of neighbouring image positions and landmarks/projected positions into account during the comparison. Such information can be utilized to characterize individual image positions and projected positions and make them distinguishable from each other. Thus, the use of descriptors allows for a more efficient matching process.

Preferably, descriptors contain numerical values quantifying a property of the environment of the image/projected position. More preferably, descriptors are invariant to rotation, translation and/or scale. This facilitates the computation of descriptors as well as the matching based on the descriptors. The matching can be performed by comparing the numerical values of a descriptor of an image position and the numerical values of a descriptor of a projected position, and requiring that the difference of the values does not exceed a predetermined threshold in order to produce a match.

Descriptors can be calculated at the time of performing matching between the corresponding image positions and projected positions. Alternatively, the descriptors can be calculated in advance and stored in a data structure of the storage means for access by the computing means.

Descriptors may be determined or calculated for image positions and projected positions. If it is required to distinguish descriptors of the image positions and descriptors of the projected positions, the terminology will be chosen accordingly. If general properties of descriptors are described that apply to descriptors of both image positions and projected positions, the term "descriptor" may be used without further specification. Further, the term "image/projected positions" will be used if reference is made to image positions and projected positions.

According to a preferred embodiment, the computing means are configured to compute the descriptor for an image/projected position as a set of numerical values, the numerical values comprising at least one of:

$$\frac{\left\|\vec{d_2}\right\|}{\left\|\vec{d_1}\right\|}; \frac{\vec{d_2}\cdot\vec{d_2}}{\vec{d_1}\cdot\vec{d_1}}; \vec{d_1}\cdot\vec{d_2}; \frac{\vec{d_1}}{\left\|\vec{d_1}\right\|}\cdot\frac{\vec{d_2}}{\left\|\vec{d_2}\right\|}; \vec{d_1}\times\vec{d_2}; \frac{\vec{d_1}}{\left\|\vec{d_1}\right\|}$$
$$\times\frac{\vec{d_2}}{\left\|\vec{d_2}\right\|}; \sin^{-1}\left(\left\|\frac{\vec{d_1}}{\left\|\vec{d_1}\right\|}\times\frac{\vec{d_2}}{\left\|\vec{d_2}\right\|}\right\|\right); \cos^{-1}\left(\frac{\vec{d_1}}{\left\|\vec{d_1}\right\|}\cdot\frac{\vec{d_2}}{\left\|\vec{d_2}\right\|}\right);$$

$$\frac{\left\|\vec{d_3}\right\|}{\left\|\vec{d_1}\right\|}; \frac{\vec{d_3}\cdot\vec{d_3}}{\vec{d_1}\cdot\vec{d_1}}; \vec{d_1}\cdot\vec{d_3}; \frac{\vec{d_1}}{\left\|\vec{d_1}\right\|}\cdot\frac{\vec{d_3}}{\left\|\vec{d_3}\right\|}; \vec{d_1}\times\vec{d_3}; \frac{\vec{d_1}}{\left\|\vec{d_1}\right\|}$$
$$\times\frac{\vec{d_3}}{\left\|\vec{d_3}\right\|}; \sin^{-1}\left(\left\|\frac{\vec{d_1}}{\left\|\vec{d_1}\right\|}\times\frac{\vec{d_3}}{\left\|\vec{d_3}\right\|}\right\|\right); \cos^{-1}\left(\frac{\vec{d_1}}{\left\|\vec{d_1}\right\|}\cdot\frac{\vec{d_3}}{\left\|\vec{d_3}\right\|}\right);$$

$$\frac{\left\|\vec{d_3}\right\|}{\left\|\vec{d_2}\right\|}; \frac{\vec{d_3}\cdot\vec{d_3}}{\vec{d_2}\cdot\vec{d_2}}; \vec{d_2}\cdot\vec{d_3}; \frac{\vec{d_2}}{\left\|\vec{d_2}\right\|}\cdot\frac{\vec{d_3}}{\left\|\vec{d_3}\right\|}; \vec{d_2}\times\vec{d_3}; \frac{\vec{d_2}}{\left\|\vec{d_2}\right\|}$$
$$\times\frac{\vec{d_3}}{\left\|\vec{d_3}\right\|}; \sin^{-1}\left(\left\|\frac{\vec{d_2}}{\left\|\vec{d_2}\right\|}\times\frac{\vec{d_3}}{\left\|\vec{d_3}\right\|}\right\|\right); \cos^{-1}\left(\frac{\vec{d_2}}{\left\|\vec{d_2}\right\|}\cdot\frac{\vec{d_3}}{\left\|\vec{d_3}\right\|}\right);$$

$$\frac{\|\overrightarrow{e_1}\|}{\|\overrightarrow{d_1}\|} \, ; \frac{\overrightarrow{e_1} \cdot \overrightarrow{e_1}}{\overrightarrow{d_1} \cdot \overrightarrow{d_1}} \, ; \, \overrightarrow{d_1} \cdot \overrightarrow{e_1} \, ; \, \frac{\overrightarrow{d_1}}{\|\overrightarrow{d_1}\|} \cdot \frac{\overrightarrow{e_1}}{\|\overrightarrow{e_1}\|} \, ; \, \overrightarrow{d_1} \times \overrightarrow{e_1} \, ; \, \frac{\overrightarrow{d_1}}{\|\overrightarrow{d_1}\|}$$

$$\times \frac{\overrightarrow{e_1}}{\|\overrightarrow{e_1}\|} \, ; \, \sin^{-1}\left( \left\| \frac{\overrightarrow{d_1}}{\|\overrightarrow{d_1}\|} \times \frac{\overrightarrow{e_1}}{\|\overrightarrow{e_1}\|} \right\| \right) ; \cos^{-1}\left( \frac{\overrightarrow{d_1}}{\|\overrightarrow{d_1}\|} \cdot \frac{\overrightarrow{e_1}}{\|\overrightarrow{e_1}\|} \right) ;$$

wherein $\overrightarrow{d_1}$ is a vector from the image/projected position to the closest image/projected position, $\overrightarrow{d_2}$ is a vector from the image/projected position to the second closest image/projected position, and $\overrightarrow{d_3}$ is a vector from the image/projected position to the third closest image/projected position, and $\overrightarrow{e_1}$ is a vector from the closest image/projected position to the second closest image/projected position.

The above descriptor values have various advantages. They represent an advantageous trade-off between the specificity of the description of the environment of the image/projected position and computational power required for the calculation. Furthermore, all specified descriptor values are invariant to translation, rotation and/or scale. That is, an image/projected position will yield the same descriptor regardless of a rotation, translation and/or scaling of the constellation of the image/projected position and its closest neighbours. This further facilitates the matching process.

With the use of descriptors, the computing means may be configured to perform matching by pairwise comparison of the descriptor of an image position and the descriptor of a projected position. When comparing descriptors, the numerical values of the descriptors are compared. It may be determined that correspondence between an image position and a projected position is confirmed when the numerical values of the descriptors of the compared image and projected position are identical, or if the difference between the numerical values lies below a predetermined threshold. In this case, the next neighbours of the matched image position and projected position, which have been taken into account for the computation of the respective descriptor, may also be considered a match.

A person skilled in the art can appreciate the manner in which the definition of descriptor values can be generalized to extract as much information on image positions and projected positions as possible that will remain unchanged if image/ projected positions undergo a 2D rotation and/or translation and/or uniform scaling.

In a situation in which the camera is spaced far apart from the visual features, small visual features may not be detected in the captured images. In such a situation, it is desirable to use large visual features with a suitably large spacing in between them. However, if the camera then approaches these large visual features, only a small number of them can remain in the camera's field of view.

Thus, an embodiment of the invention uses visual features of multiple sizes. In this case, it is preferred that the landmarks of the 3D model comprise information on the size of the visual features. It is particularly preferred that the positioning system comprises a plurality of visual features that have a discrete number of given different sizes, e.g., each visual feature has one of three given sizes.

The utility of visual features with multiple sizes is twofold.

Firstly, the difference in visual feature sizes make them more distinctive one from another. According to one preferred embodiment, the difference between visual feature sizes, and/or the difference between the sizes of visual feature image representations can be used as descriptor values.

According to one preferred embodiment, the difference in size can be exploited to calculate size-related numerical values, e.g. size relations. Such numerical values can thus be used as descriptor values. This makes the matching process even more discriminative, thus producing fewer false matches. If a small number of different visual feature sizes is used, then there is a comparably small number of possible size relations between two visual features. This insight increases robustness as various imaging imperfections can sometimes make detected visual feature representations appear slightly smaller or larger. Size relation can be any function that takes sizes of two visual features or visual feature representations as inputs and produces as an output a measure that correlates with the size difference between the inputted sizes. The function computing the said size relation can be, for example, a ratio of two sizes or the difference between two sizes. The advantage of calculating size ratios is that these values are expected to be scale invariant.

Secondly, and more importantly, using visual features with various sizes may be used for an alternative concept of "closest neighbours". For example, when the camera is far away from the visual features, it might only detect the large visual features and miss smaller ones. The nearest neighbouring visual representations of visual features contained in the captured image then might not correspond to the nearest neighbouring landmarks in the 3D model. For this reason, a preferred embodiment uses a concept of "size-aware closest neighbours", instead of ordinary closest neighbours: After an image position and a landmark are selected for pairwise matching, the image/projected position's nearest neighbour (and, possibly, second and/or third nearest neighbour) is identified.

With the concept of size-aware closest neighbours, only image positions whose visual representations have a given size relation relative to the visual representation of the selected image position are taken into consideration for the determination of the nearest (and, possibly, second and/or third nearest) neighbour, and only projected positions/landmarks with a given size relation relative to the selected projected positions/landmark are taken into consideration for the determination of the nearest (and, possibly, second and/or third nearest) neighbour. For example, a size-aware determination of closest neighbours for a selected image position may require that only image positions with a visual representation having a size approximately equal to the size of the image representation of the selected image position are taken into consideration for the determination of the nearest neighbour(s). Analogously, in this case, only projected positions/landmarks with a size approximately equal to the size of the selected projected positions/landmark would be taken into consideration for the determination of the nearest neighbour(s) of the selected projected positions/landmark.

Thus, according to a preferred embodiment using size aware closest neighbours, the closest (and/or second closest, and/or third closest) image/projected position and/or landmark is determined as the closest (and/or second closest, and/or third closest) image/projected position and/or landmark having a predetermined size relation with regard to the selected image/projected position and/or landmark.

The size relation can be calculated with tolerance to noise by rounding the computed value to one of the known possible values. If it is known how many different feature sizes are used, then there is a finite number of possible size relations. Therefore, if only two or three different feature sizes are used, matching size relations of closest neighbours can result in a very robust/noise tolerant procedure. Search for the closest size-aware neighbours for specific landmarks need not be performed exactly at the moment when this information is required. Instead, closest neighbours with specific size relations can be established during the creation of the 3D model and stored within that same 3D model, or at any time thereafter.

In the context of the present invention, the concepts that rely on finding the closest neighbouring visual feature representations in an image or the closest neighbouring landmarks in the 3D model or the closest neighbouring projected landmarks are to be understood as encompassing the option of utilizing the concept of closest size-aware neighbours.

The computing means may be configured to determine the size of the image representations of the visual features in the captured image, and to calculate the descriptor for an image/projected position such that it contains a numerical value representing the size relation of the visual feature corresponding to the image/projected position and the size of the neighbouring visual features.

For example, if a descriptor is calculated for a projected position, the size relation of the corresponding visual feature and the nearest visual feature, and/or the size relation of the corresponding visual feature and the second nearest visual feature may be calculated as a numerical value for the descriptor. Similarly, when calculating the corresponding descriptor for an image position, the the size relation of the image representation of the corresponding visual feature and the size relation of the image representation of the nearest visual feature, and/or the size relation of the image representation of the corresponding visual feature and the image representation of the second nearest visual feature is calculated as numerical value for the descriptor.

Even if descriptors are not used for the matching process, the matching process may still include a comparison of the size relation of a visual feature and its closest neighbour (as stored in the landmarks of the 3D model) to the size relation of the visual feature's image representation and its closest neighbour. If the size relations are substantially different, the two pairs are presumed not to be a match.

It is furthermore preferred that the computing means are configured to perform matching until a predetermined number of image positions are matched to projected positions, i.e., until a predetermined number of corresponding pairs of image positions and projected positions is found. Preferably, the predetermined number of corresponding pairs of image positions and projected positions is three or higher. This provides a more robust determination of the three-dimensional position of the object.

Generally, wherein there is no regularity in positions of the visual features and, thus, landmark positions, a vast majority of descriptor comparisons will not produce a match. This is because visual features with an irregular distribution rarely have a sufficiently similar distribution of neighbouring visual features that would yield a match based on descriptors. However, there are situations where many descriptor based correspondences between pairs of image positions and projected positions may be found even for incorrect correspondences. These situations are most often caused by overly regular distributions of visual features, such as a perfect grid, and weak thresholds in the matching criteria.

In such cases, it is preferable to perform matching until a predetermined number of corresponding pairs of image positions and projected positions are found. The higher the predetermined number is chosen, the more reliable the matching process will be.

It is further preferable that the computing means are configured to perform corroboration as a part of, in connection with and/or during the matching process. It is particularly preferred that corroboration is performed after the matching has returned a positive result.

Corroboration designates a process of verifying a match. That is, after a match has been established between a predetermined pair of projected positions and image positions, the computing means are configured to perform further comparisons between the (yet unmatched) image positions and the projected positions to corroborate the match. The corroboration process may be terminated with a positive result if a sufficient number of the additional comparisons for corroboration returns a positive result. Accordingly, the match may be discarded and the matching process resumed if the additional comparisons for corroboration return a negative result or an insufficient number of positive results. This way, incorrect matches can be identified with improved reliability, thus improving the performance of the positioning system. Corroboration may be regarded as a part of the matching process.

In a further preferred embodiment, the computing means are configured to

- determine a first transformation for transforming matched image positions to matched projected positions obtained during the matching between the image positions of the visual features and the projected positions of the visual features;

- apply the first transformation to the image positions of the visual features captured in the image to obtain refined image positions;

- perform matching between the refined image positions of the visual features and the projected positions of the visual features to identify the visual features captured in the image.

With the determination of the first transformation and the subsequent matching of refined image positions and projected positions, the efficiency of the matching between the sets of image positions and projected positions may be improved. For determining the first transformation, the computing means are configured to perform matching between the projected positions and the image positions until a predetermined number of matches is found. Preferably, the predetermined number of corresponding pairs constituting a match is two or higher. Two pairs between the set of image positions and projected positions are sufficient to determine the first transformation consisting of 2D rotation, translation and/or scaling that is suitable to transform the pair of image positions to the corresponding pair of projected positions.

If the matching is performed with the use of descriptors as described above that take into account at least one next neighbour, one descriptor based match between an image position and a projected position implies that the closest neighbour of the image and projected position also correspond to each other.

Thus, for matching to be terminated with a positive result, it may be sufficient to require only one descriptor based match between an image position and a projected position, and to qualify the closest neighbour of the matching positions as further match. Based on these matches, the first transformation can be determined.

After the first transformation has been determined, it is applied to the (yet unmatched) image positions to obtain refined image positions. Afterwards, matching (i.e. the search for corresponding pairs of image positions and projected positions) is continued between the refined image positions and the projected positions. Preferably, matching between the refined image positions and the projected positions is terminated with a positive result, if a predetermined number of corresponding pairs between refined image positions and projected positions is found.

The matching of refined image positions and projected positions thus corresponds to corroborating the match based on which the first transformation is calculated. If the match from which the first transformation is determined is valid, the application of the first transformation on the set of image positions will yield a set of refined image positions that fall in close proximity to the set of projected positions so that further matches between the refined image positions and the projected positions may be established. When a predetermined number of matches between the refined image positions and the projected positions is established, the matching may be terminated with a positive result. If the predetermined number of matches between the refined image positions and the projected position is not reached within a predetermined time, or after comparing all refined image positions, the matching on which the calculation of the first transformation is based may be determined as a false match. In this case, the process of matching is resumed by comparing other pairs of image positions and projected positions in order to establish a sufficient number of matches for recalculating the first transformation.

In an alternative preferred embodiment, the computing means are configured to

- determine a second transformation for transforming matched projected positions to matched image positions obtained during the matching between the image positions of the visual features and the projected positions of the visual features;

- apply the second transformation to the projected positions to obtain refined projected positions;

- perform matching between the image positions of the visual features and the refined projected positions of the visual features to identify the visual features captured in the image.

The advantages obtainable with this embodiment correspond to those described for the previous embodiment. After a sufficient number of corresponding pairs of image and projected positions has been established to calculate the second transformation, a corroboration is performed by transforming the projected positions to refined projected positions and performing matching between image positions and refined projected positions. As with the previous embodiment, matching may be terminated with a positive result if a predetermined number of matches between image positions and refined projected positions has been established.

According to a further preferred alternative, the computing means are configured to determine a third transformation based on identified corresponding pairs between image positions and landmarks/projected positions, and to apply the third transformation to the estimated orientation (and/or position) of the camera to obtain a refined estimation of the orientation (and/or position) of the camera. The computing means are further configured to project the landmark positions based on the estimated camera orientation (and/or position) combined with said third transformation, e.g. by refining the definition of the virtual image plane based on the refined estimation of the orientation (and/or position) of the camera. With this embodiment, after a sufficient number of corresponding pairs between image positions and landmarks/projected positions has been identified in order to determine the third transformation, the estimation of the camera's orientation (and/or position) is refined with the use of the third transformation. Thus, a refined virtual image plane is obtained that may be more suitable to identify the visual features whose image representations are contained in the image captured by the camera. Preferably, the number of corresponding pairs on which the calculation of the third transformation is based is two or higher.

Upon selecting an image position and a landmark/projected position to perform matching, their respective closest neighbours are selected. For the selected landmark/projected position, the closest neighbour may be identified based on distances between landmarks in the 3D model, or by identifying a projected position closest to the selected projected position. The third transformation is a transformation of the camera orientation (and/or position) consisting of roll rotation (and/or translation) and it is uniquely determined based on the constraint that the selected two image positions correspond to the two selected landmark positions/projected positions. This third transformation, when applied to the originally estimated camera orientation (and/or position), yields a refined camera orientation (and/or position). Using the refined camera orientation (and/or position), the positioning system can immediately proceed to corroboration, projecting the positions of yet uncorrelated landmarks in order to check whether the projected points will overlap with any of the image positions.

Said transformations can, for example, be determined with the aid of descriptors in the sense of the invention that contain information only on one closest neighbour. The descriptors used in the determination of the transformations could be designated as trivial descriptors, since they do not primarily serve to perform the matching itself, but to refine the estimation of the orientation of the camera. Trivial descriptors, when compared against any other trivial descriptor, always yield a successful match. This successful match can be used for the determination of the first, second or third transformation, which allows the positioning system to refine the image positions or projected positions and continue matching by proceeding with corroboration.

According to a further preferred embodiment, the computing means are configured to perform an estimation of the distance between the camera and at least one visual feature whose image representation is contained in the captured image.

From the image captured by the camera, no depth information about the visual features represented in the image can be obtained. That is, the distance between the camera and the captured visual features cannot be derived from the information contained in the image. If the distance between the camera and the captured visual features is amended, the ratio of the 2D distances between the visual features in the captured image may vary. This effect is known as parallax effect. In order to further optimize the matching process, it is therefore preferable to perform an estimation of the distance between the camera and at least one visual feature whose image representation is contained in the captured image. Preferably, the estimation of the distance is performed before defining the virtual image plane, in order to be able to take the estimated distance into account when defining the virtual image plane.

It is preferred that the estimation of the distance between the camera and the at least one visual feature whose image representation is contained in the captured image is based on the average distance between the camera and visual features that is obtained during a previous operation of the positioning system.

For use of the positioning system after a successful matching has been completed, i.e. during an operation in which the positioning system is able to identify the visual features whose image representations are captured in the images, the position of the camera can be determined by means of a suitable SLAM algorithm. During this operation, the distance between the camera of the positioning system and the visual features captured in the images taken by the camera can also be determined. When the determination of the 3D position of the object is performed with the positioning system according to the invention after a time period in which the camera lost vision, the distance between the camera and the visual features captured in the image can be estimated based on the distance between the camera and visual features during the previous operation of the positioning system, before the camera lost vision. The previous operation may also be the time of operation when the 3D model was created. The estimation of the distance may be based on the distance between the camera and at least one visual feature captured in at least one image during previous operation. Preferably, multiple distances between visual features and the camera during previous operation are taken into account. Further preferably, the estimation of the distance is based on an average over multiple distances between the camera and visual features during previous operation of the positioning system.

It is further preferred that the estimation of the distance between the camera and the at least one visual feature whose image representation is contained in the captured image is based on the number of image representations of visual features in the captured image. This approach is feasible if an approximate spatial density of visual features is known. With increasing distance between the camera and the visual features, more visual features will be represented in the image captured by the camera. Based on this correlation, a distance between the camera and at least one visual feature may be estimated. This approach enables a computationally efficient and conceptually simple estimation of the distance.

According to a preferred embodiment, the computing means are configured to define a plane perpendicular to the direction of gravity as a virtual image plane.

In many cases, a majority of the visual features is located above the positioning system - for example, in cases in which the positioning system is used indoors and the visual features are positioned on a ceiling. Further, in such cases it may be a reasonable approximation to assume that most of the visual features are essentially positioned on a common 3D plane, particularly if the visual features are located at a sufficient distance from the camera. Preferably, it is assumed in such cases that the visual features are essentially positioned on a common horizontal 3D plane, i.e. a 3D plane perpendicular to the direction of gravity. If the virtual image plane is then defined as a plane perpendicular to the direction of gravity, the positions of the landmarks are essentially projected onto a plane parallel to the plane on which the visual features substantially lie. This facilitates the matching process.

If a plane perpendicular to the direction of gravity is defined as a virtual image plane, it may be preferable that the landmarks of the 3D model include information about the direction of gravity. This information may be stored in the landmarks of the 3D model during the creation of the 3D model by reading the output of an orientation determination means like an accelerometer while the camera is resting. Alternatively or additionally, while the camera positioning system is operational, the user may be required to position the camera at several points in space, each point lying within a given tolerance on a single plane. This enables the positioning system to identify the plane and its accompanying normal vector within the 3D model. Alternatively or additionally, while the camera positioning system is operational, the user may be required to select several landmarks of the 3D model which are substantially lying on the same plane in order to identify the plane that way.

According to a further preferred embodiment, the computing means are configured to fit an auxiliary plane to the positions of the landmarks in the 3D model, and to define the virtual image plane as a plane parallel to the auxiliary plane.

This embodiment is again based on the assumption that the visual features essentially lie on a common plane. The position and orientation of the auxiliary plane can be determined, for example, by minimising the sum of squared distances between the auxiliary plane and the positions of the landmarks.

Surprisingly, it has been found that the said planarity assumption with regard to the visual features is a very loose assumption that yields a beneficial performance of the matching process in most cases, even in cases where the distribution of visual features significantly deviates from the assumed essentially planar arrangement. The distribution of the landmarks in 3D space can significantly diverge from the fitted auxiliary plane or the plane perpendicular to the direction of gravity, and the position of the object can still be determined with satisfying accuracy. The reason for this is that many of the theoretically possible distributions of the visual features are highly unlikely in real life situations. For example, visual features in the environment usually span the camera's field of view and are not stacked one behind the other.

It is further preferred that the computing means are configured to perform an unskewing of the image positions of the visual features.

In the context of the present invention, the term "unskewing" designates a transformation of the image positions to positions at which the image positions would be located in a captured image if the orientation of the camera had been orthogonal to the virtual image plane.

Assuming that most of the visual features are positioned substantially on the same 3D plane, it is easier to match the image positions with the projected positions if the camera is looking orthogonally into that plane (and, thus, orthogonally into the virtual image plane that is defined as being parallel to the 3D plane of the visual features). If the estimated orientation of the camera is such that the camera is not looking orthogonally into that plane, unskewing may be performed in order to transform the image positions to simulate their position if the orientation of the camera had been oriented orthogonally towards the 3D plane containing the visual features. This facilitates the matching process.

Using the unskewing of the image positions is also beneficial because the image positions are transformed such that it may be sufficient to project the three-dimensional positions of the visual features stored in the 3D model only once and perform the subsequent matching fully in 2D space, without repeating the projecting step.

Preferably, the computing means are configured to determine a first unskewing transformation, which represents a rotation of the camera that would align it to look orthogonally to the virtual image plane, and wherein the unskewing of the image positions of the visual features is performed by applying the first unskewing transformation to the image positions. This provides a straightforward solution for performing the unskewing of the image position.

It is further preferred that the computing means are configured to determine a second unskewing transformation which represents a rotation of the camera that would align it to look in the direction or opposite to the direction of gravity, and wherein the unskewing of the image positions of the visual features is performed by applying the second unskewing transformation to the image positions. This approach is preferred if the virtual image plane is defined as a plane perpendicular to the direction of gravity. In this case, the application of the second unskewing transformation will project the image positions onto a plane parallel to the virtual image plane, so that matching is facilitated. Using the unskewed image positions instead of the originally detected image positions, a more precise estimation of the camera's orientation can be obtained - we know it is looking upwards or downwards. Camera roll is the only missing information regarding the camera's orientation.

According to a further preferred embodiment, the computing means are configured to perform a correction of the captured image and/or the image positions of the visual features for lens distortions of the camera.

When this correction is applied, a visual feature's position in a camera image gets undistorted. Geometric properties extracted from the position of the detected feature are more accurate if the feature's position in an image is undistorted. Thus, the correction for lens distortion may increase the accuracy of the position determination.

If not specified otherwise, all mentions of image positions in the context of the present invention imply the undistorted image positions but are not limited to this interpretation.

To perform undistortion, a model of the camera and its imaging optical system is provided and preferably stored in the storage means for access by the computing means. Such a model typically includes information about the camera's pixel resolution, field of view, center shift (also known as the principal point in the field of computer vision) and a model of lens distortions.

In order to achieve higher geometrical accuracy, when determining the location of a feature in an image captured by the camera, it is possible to first undistort the original camera image. Alternatively, as an optimization, only the image pixels that comprise visual feature representations can be undistorted. Alternatively, the corrections are performed on values of the image positions determined in the captured image. This approach saves processing power by not having to undistort individual pixel position values which are displaying the visual feature or the whole image.

A further aspect of the present invention relates to a method for determining the three-dimensional position of a movable object. The method comprises the following steps:

a) receiving an image captured by a camera with a well-defined position and/or orientation relative to the object, the image containing image representations of at least a part of a plurality of visual features that are placeable at fixed locations spaced apart from the object and/or camera,
b) detecting the positions of image representations of the visual features in the captured image as image positions of the visual features;
c) performing an estimation of the orientation of the camera;
d) defining a virtual image plane, preferably based on the estimation of the orientation of the camera;
e) projecting three-dimensional positions of at least a part of the visual features stored in a 3D model onto the virtual image plane to create projected positions of the visual features, the 3D model comprising a set of landmarks for the visual features, the landmarks containing information on the three-dimensional position of the corresponding visual feature;
f) performing matching between the image positions of the visual features and the projected positions of the visual features to identify the visual features captured in the image;
g) determining the three-dimensional position and/or orientation of the object based on the information on the three-dimensional positions of the visual features identified in the matching process.

The technical advantages achieved with the method of the present invention correspond to those achieved with the positioning system described above. Aspects, features and advantages described in the context of the inventive positioning system are also applicable to the inventive method, and vice versa. In particular, any task that the computing device of the inventive positioning system is configured to perform can be employed as a method step in the inventive method, and vice versa. Preferably, the inventive method is performed using an inventive positioning system as described above.

As with the inventive positioning system, the inventive method for determining the three-dimensional position of a movable objects provides a robust and computationally efficient solution to locating an object after the camera of the positioning system lost track of the 3D model and cannot determine which visual features are represented in the currently captured images.

It should be noted that the method is not limited to the above-identified order of the steps. The steps may be performed in a different order, may be performed simultaneously, and/or may be repeated. For example, the order of steps a) to d) may be reversed or amended, or the steps may be performed simultaneously. The only applicable restriction with regard to the order of steps is that some steps are dependent on other steps. For example, step e) cannot be performed without previously performing step d). Similarly, step b) is dependent on the completion of step a), and step f) is dependent on the completion of steps b) and e). Steps d) and e) may be performed before every execution of step f). If matching in step f) is unsuccessful (i.e., if no match is acquired after a predetermined time, a predetermined number of matching attempts, or after a pairwise matching of every projected position with every image position), steps a), b), c), d) and/or e) may be repeated before repeating step f). Preferably, if matching is unsuccessful, a new virtual image plane is defined by repeating steps c) and/or d).

It is preferable that step c) is performed with the use of at least one orientation determining means, preferably a gyroscope, an accelerometer, a magnetometer and/or an inertial measurement unit, that is/are coupled to the camera.

Further preferably, the matching between the image positions and the projected positions of the visual features is performed based on descriptors of the image positions and the projected positions, wherein the descriptor for an image position is computed based on the distribution of neighbouring image positions, and wherein the descriptor for a projected position is computed based on the distribution of neighbouring projected positions. Herein, it is preferred that the matching is performed by a pairwise comparison of descriptors for an image position and a projected position. This enables the realization of a matching process that is simple to implement and reliable.

It is further preferred that the descriptor for an image and/or projected position is computed as a set of numerical values, the numerical values comprising at least one of:

$$\frac{\left\|\vec{d_2}\right\|}{\left\|\vec{d_1}\right\|}; \frac{\vec{d_2}\cdot\vec{d_2}}{\vec{d_1}\cdot\vec{d_1}}; \vec{d_1}\cdot\vec{d_2}; \frac{\vec{d_1}}{\left\|\vec{d_1}\right\|}\cdot\frac{\vec{d_2}}{\left\|\vec{d_2}\right\|}; \vec{d_1}\times\vec{d_2}; \frac{\vec{d_1}}{\left\|\vec{d_1}\right\|}$$
$$\times\frac{\vec{d_2}}{\left\|\vec{d_2}\right\|}; \sin^{-1}\left(\left\|\frac{\vec{d_1}}{\left\|\vec{d_1}\right\|}\times\frac{\vec{d_2}}{\left\|\vec{d_2}\right\|}\right\|\right); \cos^{-1}\left(\frac{\vec{d_1}}{\left\|\vec{d_1}\right\|}\cdot\frac{\vec{d_2}}{\left\|\vec{d_2}\right\|}\right);$$

$$\frac{\left\|\vec{d_3}\right\|}{\left\|\vec{d_1}\right\|}; \frac{\vec{d_3}\cdot\vec{d_3}}{\vec{d_1}\cdot\vec{d_1}}; \vec{d_1}\cdot\vec{d_3}; \frac{\vec{d_1}}{\left\|\vec{d_1}\right\|}\cdot\frac{\vec{d_3}}{\left\|\vec{d_3}\right\|}; \vec{d_1}\times\vec{d_3}; \frac{\vec{d_1}}{\left\|\vec{d_1}\right\|}$$
$$\times\frac{\vec{d_3}}{\left\|\vec{d_3}\right\|}; \sin^{-1}\left(\left\|\frac{\vec{d_1}}{\left\|\vec{d_1}\right\|}\times\frac{\vec{d_3}}{\left\|\vec{d_3}\right\|}\right\|\right); \cos^{-1}\left(\frac{\vec{d_1}}{\left\|\vec{d_1}\right\|}\cdot\frac{\vec{d_3}}{\left\|\vec{d_3}\right\|}\right);$$

$$\frac{\left\|\vec{d_3}\right\|}{\left\|\vec{d_2}\right\|}; \frac{\vec{d_3}\cdot\vec{d_3}}{\vec{d_2}\cdot\vec{d_2}}; \vec{d_2}\cdot\vec{d_3}; \frac{\vec{d_2}}{\left\|\vec{d_2}\right\|}\cdot\frac{\vec{d_3}}{\left\|\vec{d_3}\right\|}; \vec{d_2}\times\vec{d_3}; \frac{\vec{d_2}}{\left\|\vec{d_2}\right\|}$$
$$\times\frac{\vec{d_3}}{\left\|\vec{d_3}\right\|}; \sin^{-1}\left(\left\|\frac{\vec{d_2}}{\left\|\vec{d_2}\right\|}\times\frac{\vec{d_3}}{\left\|\vec{d_3}\right\|}\right\|\right); \cos^{-1}\left(\frac{\vec{d_2}}{\left\|\vec{d_2}\right\|}\cdot\frac{\vec{d_3}}{\left\|\vec{d_3}\right\|}\right);$$

$$\frac{\left\|\vec{e_1}\right\|}{\left\|\vec{d_1}\right\|}; \frac{\vec{e_1}\cdot\vec{e_1}}{\vec{d_1}\cdot\vec{d_1}}; \vec{d_1}\cdot\vec{e_1}; \frac{\vec{d_1}}{\left\|\vec{d_1}\right\|}\cdot\frac{\vec{e_1}}{\left\|\vec{e_1}\right\|}; \vec{d_1}\times\vec{e_1}; \frac{\vec{d_1}}{\left\|\vec{d_1}\right\|}$$
$$\times\frac{\vec{e_1}}{\left\|\vec{e_1}\right\|}; \sin^{-1}\left(\left\|\frac{\vec{d_1}}{\left\|\vec{d_1}\right\|}\times\frac{\vec{e_1}}{\left\|\vec{e_1}\right\|}\right\|\right); \cos^{-1}\left(\frac{\vec{d_1}}{\left\|\vec{d_1}\right\|}\cdot\frac{\vec{e_1}}{\left\|\vec{e_1}\right\|}\right);$$

wherein $\vec{d_1}$ is a vector from the image or projected position to the closest image or projected position, $\vec{d_2}$ is a vector from the image or projected position to the second closest image or projected position, and $\vec{d_3}$ is a vector from the image or projected position to the third closest image/projected position, and $\vec{e_1}$ is a vector from the closest image/projected position to the second closest image/projected position.

According to a further preferred embodiment, the matching is performed until a predetermined number of image positions, preferably three image positions, are matched to projected positions.

It is further preferred that the matching step comprises

h) determining a first transformation for transforming the matched image positions to the matched projected positions based on the matching between the image positions of the visual features and the projected positions of the visual features;

i) applying the first transformation to the image positions of the visual features captured in the image to obtain refined image positions;

j) performing matching between the refined image positions of the visual features and the projected positions of the visual features to identify the visual features captured in the image,

wherein, optionally, steps h) to j) are repeated.

Preferably, the method comprises corroborating the matching of step j) by determining distances between refined image positions and closest projected positions, and terminating the matching when a predetermined number of distances between refined image positions and closest projected positions lies below a predetermined threshold.

According to an alternative preferred embodiment, the matching step comprises

h) determining a second transformation for transforming the matched projected positions to the matched image positions based on the matching between the image positions of the visual features and the projected positions of the visual features;

i) applying the second transformation to the projected positions to obtain refined projected positions;

j) performing matching between the image positions of the visual features and the refined projected positions of the visual features to identify the visual features captured in the image,

wherein, optionally, steps h) to j) are repeated.

Preferably, the method comprises corroborating the matching of step j) by determining distances between image positions and closest refined projected positions, and terminating the matching when a predetermined number of distances between image positions and closest refined projected positions lies below a predetermined threshold.

As described before in the context of the inventive positioning system, the step of performing matching by pairwise comparison of image positions and projected positions based on their respective descriptor can be terminated with a positive result if one match is found. Alternatively, matching may be continued until a predetermined number of matches between pairs of descriptors has been found. Furthermore, if matching is terminated with a positive result as described, a corroboration can be performed on the matching result.

For corroboration, it is preferred that matching is performed until a sufficient number of image positions have been matched to corresponding projected positions to enable the determination of a first (or second) transformation that, when applied to the image positions, transforms their positions to those of the matched projected positions (or vice versa). Typically, two matches or more are sufficient to determine said first (or second) transformation. Once matching has been performed to yield the predetermined number of matches between image positions and projected positions, the first (or second) transformation is determined. For corroboration, the first (or second) transformation is applied to one or more image positions (or projected positions) to acquire refined image positions (or refined projected positions), and it is determined whether the refined image position (or the image position) matches a projected position (or refined projected position), e.g., whether the distance between the refined image position (or image position) and the closest projected position (or closest refined projected position) lies below a predetermined threshold. If this is the case, a corroboration count is incremented by 1. In this way, corroboration is continued until the corroboration count reaches or exceeds a predetermined threshold. If the threshold is reached or exceeded, it is confirmed that the matching is positive, and the matching process is ended. If the corroboration count does not reach or exceed the predetermined threshold, it is determined that the match is false, and the method resumes with the process of performing matching by comparing another pair of image position and projected position.

If matching is performed with a descriptor that takes into account the two next neighbours, it may be assumed that three matching pairs of image positions and projected positions have been found when a descriptor comparison yields a match. In this case, it may be sufficient to perform matching until one match is found, and to use the image and projected positions that were used to calculate the respective descriptor for the determination of the transformation that will be used for corroboration.

According to a further preferred embodiment the method comprises estimating a distance between the camera and at least one visual feature whose image representation is contained in the captured image.

It is preferred that estimating the distance between the camera and at least one visual feature whose image representation is contained in the captured image is based on the average distance between the camera and visual features during previous positioning determinations.

It is further preferred that estimating the distance between the camera and at least one visual feature whose image representation is contained in the captured image is based on the number of image representations of visual features in the captured image.

According to a further preferred embodiment, the virtual image plane is defined as a plane perpendicular to the direction of gravity.

It is further preferable that the method, preferably step b), comprises an unskewing of the image positions of the visual features.

Preferably, the unskewing comprises determining a first unskewing transformation which which represents a rotation of the camera that would align it to look orthogonally towards the virtual image plane, wherein the unskewing of the image positions of the visual features is performed by applying the first unskewing transformation to the image positions.

Alternatively, the unskewing comprises determining a second unskewing transformation which which represents a rotation of the camera that would align it to look in the direction or opposite to the direction of gravity, and wherein the unskewing of the image positions of the visual features is performed by applying the second unskewing transformation to the image positions.

According to a preferred embodiment, the method comprises correcting the captured image and/or the image positions of the visual features for lens distortions of the camera.

In the described methods of performing matching, finding closest neighbours of image positions and projected positions is a common task that has to be performed frequently. For optimization purposes, it is preferred that this task is performed once for each image position and/or for each projected position. The result may be stored in a table containing a list of closest neighbours of each image/projected position.

In order to further optimize the described method, it may be preferable to store image positions and/or projected positions in a hashmap data structure based on their position. This allows quick access to the image positions and/or projected positions.

Optionally, image positions and/or projected positions are stored in an approximated form, e.g. by rounding the coordinates to the number of decimal places higher than the expected error. This way any two points with locations within the allowed error will always be mapped to the same key in the hashmap.

The object of the invention is further solved by a computer-readable medium containing instructions that, when executed by at least one processor, cause the at least one processor to perform a computer-implemented method comprising steps in accordance with the inventive method described above. The technical advantages achieved with the method of the present invention correspond to those achieved with the computer-implemented method and corresponding computer-readable medium. Aspects, features and advantages described in the context of the inventive method are also applicable to the inventive computer-implemented method and computer-readable medium.

The above and further features and advantages of the present invention will become more readily apparent from the following detailed description of preferred embodiments of the invention with reference to the accompanying drawings, in which:

Fig. 1　　　is a schematic illustration of a positioning system according to a preferred embodiment of the present invention;

Fig. 2　　　schematically illustrates an orientation of the camera of the positioning system relative to a direction parallel to the direction of gravity;

Fig. 3a-d　　are conceptual drawings illustrating definitions of descriptors according to preferred embodiments of the present invention;

Fig. 4a-c　　are conceptual drawings illustrating definitions of descriptors according to further preferred embodiments of the present invention;

Fig. 5　　　schematically illustrates an unskewing process according to a preferred embodiment of the present invention;

Fig. 6　　　illustrates a sequence of method steps according to an embodiment of the present invention;

Fig. 7　　　illustrates a sequence of method steps according to an alternative embodiment.

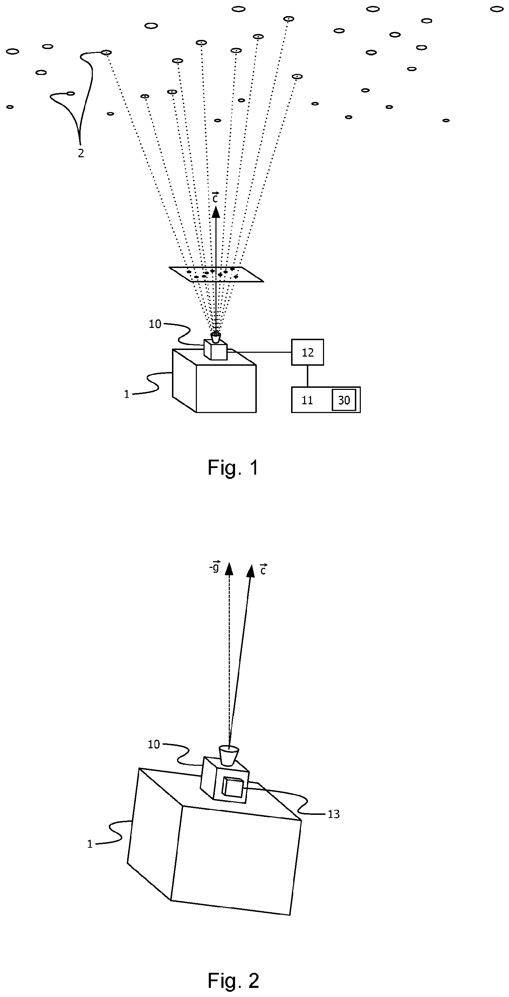

Fig. 1 is a schematic illustration of a positioning system according to a preferred embodiment of the present invention. The positioning system is used to determine the location of an object 1. A camera 10 is attached to the object 1 at a defined relative position and orientation, such that the relative position and orientation between the object 1 and the camera 10 remains unaltered when the object 1 and the camera 10 are moved.

The camera 10 is communicatively coupled to a computing means 12 and a storage means 11, which is configured to store a 3D model 30 that will be discussed in greater detail below. The computing means 12 and the storage means 11 may be contained in a unit or units distinct from the camera 10, e.g. in a computer that is communicatively coupled to the camera 10. Alternatively, the computing means 12 and/or the storage means 11 may be provided at the position of the camera 10, e.g. in the form of a microcomputer and corresponding data storage device.

The positioning system comprises the camera 10, the storage means 11 and the computing means 12.

Spaced apart from the object 1, a plurality of visual features 2 is present in the environment of the object 1. In the embodiment shown in Fig. 1, the visual features 2 are represented by circular or elliptic markers that are located above the object 1. Neither the position relative to the object 1 nor the nature of the visual features 2 is limited to this embodiment. It is merely decisive that the camera 10 is able to capture images containing image representations of at least a part of the visual features 2.

In Fig. 1, an image plane of the camera 10 is schematically depicted above the camera 10 in the manner usual in the art. The orientation of the camera 10 is represented by a vector $\vec{c}$ pointing from the camera 10 along its optical axis in a direction perpendicular to the camera's image plane and extending through the center of the camera's field of view.

Visual features 2 that are in the field of view of the camera 10 will be visible in an image captured by the camera 10 that corresponds to the depicted image plane. The image representations of these visual features 2 are schematically indicated in the depicted image plane above the camera 10. When the object 1 and, thus, the camera 10, are moved, the camera's position and/or orientation will change. Correspondingly, images captured by the camera 10 will display a movement of the image representations of the visual features 2 in the camera's field of view. Some visual features 2 will leave the field of view of the camera 10 and other visual features 2 will enter the field of view of the camera 10.

The storage means 11 stores a 3D model 30 of the visual features 2. The 3D model 30 contains information on the three-dimensional positions of the visual features 2 that are referred to as landmarks $l_1, ..., l_n$. If N visual features 2 are accounted for in the 3D model 30, the 3D model 30 will contain N landmarks $l_1, ..., l_n$, each landmark $l_1, ..., l_n$ containing information on the three-dimensional position of a corresponding visual feature 2. As detailed in the general part of the description, information on the 3D position of the visual features 2 may, for example, be provided as discrete coordinates, or as a probability distribution.

If the positioning system can identify the landmarks $l_n$ corresponding to the visual features 2 represented in the image, the position of the camera 10 and the object 1 can be calculated, based on the known position of the visual features 2 contained in the 3D model 30 and the intrinsic properties of the camera 10.

If, however, the camera 10 is obstructed and moved during operation of the positioning system, or if the positioning system is turned off for a while and turned back on again, it is not possible to determine which visual features 2 are captured in the image of the camera 10. In this case, it is not possible to determine the position of the camera 10 and the object 1.

Thus, in order to determine the three-dimensional position of the camera 10 and, thus, of the object 1, the visual features 2 in the field of view of the camera 10, whose image representations are contained in the images captured by the camera 10, need to be identified.

In order to accomplish this task, the computing means 12 are configured to perform a method for identifying the visual features 2 captured in an image of the camera 10. Based on the identification of the visual features 2 represented in the image of the camera 10, the position of the object 1 can be determined as explained above.

The method for identifying the visual features 2 captured in an image of the camera 10 is based on a novel, efficient algorithm that is designed to match the visual features captured in the image of the camera 10 to the 3D model 30, in order to enable an identification of the visual features 2 captured in the image.

In order to determine the position of the object 1, the camera 10 of the positioning system is configured to capture an image that contains image representations of at least a part of the visual features 2. In the example of Fig. 1, the image captured by the camera 10 contains image representations of nine visual features 2. The positioning system is configured to detect positions of the image representations of the visual features 2 in the captured image. These positions are stored as image positions $i_1, ..., i_n$.

The detection of the image positions $i_1, ..., i_n$ may be based on a suitable feature extraction algorithm, as detailed in the general part of the description. If the image representations of the visual features 2 have a substantial extent in the image (i.e., if the image representations of the visual features 2 cover a substantial area of the image with a plurality of pixels), the image positions $i_1, ..., i_n$ may be determined as a center of the area of the image representation and stored as x/y (pixel) coordinates. Alternatively, the image positions $i_1, ..., i_n$ may be stored as a distribution representing the area of the image representation.

The image positions $i_1, ..., i_n$ thus obtained represent a set of 2D positions that needs to be matched with the 3D positions of the visual features 2 stored in the landmarks $l_1, ..., l_n$ in the 3D model 30, in order to identify the visual features 2 corresponding to the image positions $i_1, ..., i_n$.

In order to enable this matching, the positioning system is configured to define a virtual image plane, onto which the 3D positions of the visual features 2 are projected. This projection yields projected positions $p_1, ..., p_n$ of the visual features. Matching is performed between the (2D) image positions $i_1, ..., i_n$ and the (2D) projected positions $p_1, ..., p_n$.

The matching between the image positions $i_1, ..., i_n$ and the projected positions $p_1, ..., p_n$ is facilitated if the image plane of the captured image from which the image positions $i_1, ..., i_n$ are determined and the virtual image plane with which the projected positions $p_1, p_2, .., p_n$ are generated have a similar orientation. In order to enable a suitable definition of the virtual image plane, the positioning system is configured to estimate the orientation of the camera 10.

Fig. 2 schematically illustrates an orientation of the object 1 and the camera 10 of the positioning system relative to a direction parallel to the direction of gravity. The orientation of the camera 10 is again expressed by the vector $\vec{c}$ pointing from the optical system of the camera 10 in a direction perpendicular to the image plane of the camera 10. The orientation vector $\vec{c}$ lies on the optical axis of the camera 10. As reference, a vector $-\vec{g}$ opposite to the direction of gravity is also shown in Fig. 2.

The orientation of the camera 10 may be estimated with the aid of orientation determination means 13 that are rigidly attached to the camera 10. Examples of orientation determination means 13 include inertial measurement units such as a gyroscope, an accelerometer or a magnetometer. Preferably, the orientation determination means 13 are configured to enable at least an approximate orientation of the camera 10. For example, if the orientation determination means 13 comprise an accelerometer, the direction of gravity $\vec{g}$ can be determined when the camera 10 is resting. Taking into consideration the fixed and known positioning of the orientation determination means 13 relative to the camera 10, the orientation $\vec{c}$ of the camera 10 can be estimated.

Additionally or alternatively, the orientation determination means 13 may comprise a magnetometer that is configured to determine the direction of the earth magnetic field, which may be used as reference to estimate the orientation of the camera. Further, the orientation determination means 13 may comprise a gyroscope that can be used to estimate the orientation of the camera 10 by integrating the angular velocity provided by the gyroscope during operation of the camera.

It should be noted that the provision of orientation determination means 13 is not a compulsory element of the positioning system. The orientation of the camera 10 may also be estimated by other means, e.g., by instructing a user to point the camera 10 in a defined direction, (e.g. north, straight upwards, tilted upwards under an angle of 45° etc.). Once the camera 10 is approximately oriented as instructed, the camera 10 captures the image that will be used to determine the position of the camera 10 and the object 1. The orientation of the camera 10 is then estimated to correspond to the instructed direction.

Further, it is possible to estimate the orientation of the camera 10 by the use of specialized camera pedestals or mounts on which the object 1 with the camera 10 is placed before capturing the image for the position determination.

The positioning system is configured to define a virtual image plane on which the positions of the visual features 2 stored in the 3D model 30 will be projected. The definition of the virtual image plane is preferably based on the estimation of the orientation of the camera 10. In some embodiments, the virtual image plane will be defined as a plane perpendicular to the estimated orientation of the camera 10. Thus, the virtual image plane is defined as parallel to the image plane of the camera 10 at the estimated orientation. In other embodiments described below, the virtual image plane is defined based on the position of the visual features 2 stored in the 3D model 30, or as a plane perpendicular to the direction of gravity.

Given the defined virtual image plane, the positioning system may project the 3D positions of the visual features 2 stored in the 3D model 30 onto the virtual image plane. Thus, projected positions $p_1$, ..., $p_n$ of the visual features 2 are created. Like the image positions $i_1$, ..., $i_n$, the projected positions $p_1$, ..., $p_n$ form a set of 2D positions that may be expressed as discrete x/y coordinates or x/y probability distributions, depending on the information on the position of the visual features 2 that is available from the landmarks $l_1$, ..., $l_n$.

The positioning system is configured to perform matching between the image positions $i_1$, ..., $i_n$ and the projected positions $p_1$, ..., $p_n$ in order to identify the visual features 2 captured in the image. The matching process is an iterative procedure that is preferably performed by a pairwise comparison of image positions $i_p$ and projected positions $p_q$. In some embodiments, a new set of projected positions $p_1$, ..., $p_n$ is created for each choice of a pair of image position $i_p$ and projected position $p_q$.

During matching, the positioning system is configured to select one image position $i_p$ and one projected position $p_q$ corresponding to a landmark $l_q$. The goal of the matching process is to determine whether the selected image position $i_p$ and the selected projected position $p_q$ (and, thus, the corresponding landmark $l_q$) correspond to the same visual feature 2.

According to one embodiment, the pairwise matching is performed by quantifying the distribution of the neighbouring image/projected positions of the selected image position $i_p$ and the selected projected position $p_q$. This quantification is achieved by the calculation of a descriptor $d_{ip}$ for the selected image position $i_p$ and a descriptor $d_{pq}$ for the selected projected position $p_q$. Descriptors are represented by an array of numerical values that characterize the distribution of the neighbouring image/projected positions.

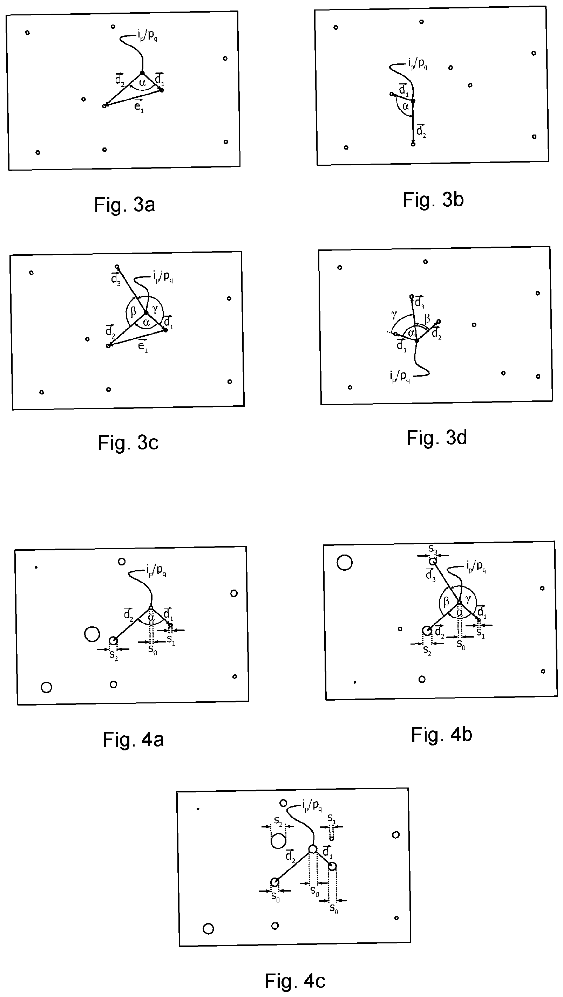

Fig. 3a to 3d schematically illustrate definitions of descriptor values according to preferred embodiments of the invention. In order to enable a fast yet reliable matching between image positions $i_p$ and projected positions $p_q$, the corresponding descriptors $d_{ip}/d_{pq}$ are preferably defined such that they are invariant to rotations, translations and/or scalings.

For the description of the descriptor value definitions illustrated in Fig. 3a to 3d, no distinction is made between image positions and projected positions, since the definitions of the descriptor values apply to descriptors for image positions and projected positions alike.

Fig. 3a and 3b illustrate the definition of a first descriptor according to a preferred embodiment of the present invention. Descriptors comprise a set of numerical values that are indicative of the environment of the corresponding image/projected position $i_p/p_q$. In Fig. 3a, a descriptor for the image/projected position $i_p/p_q$ is illustrated. In order to compute the descriptor, the two next nearest neighbours of the image/projected position $i_p/p_q$ are identified. Then, the vector $\vec{d_1}$ between the image/projected position $i_p/p_q$ and its nearest neighbour is computed. Likewise, the vector $\vec{d_2}$ between the image/projected position $i_p/p_q$ and its second nearest neighbour is computed. Furthermore, the vector $\vec{e_1}$ between the nearest neighbour and the second nearest neighbour of the image/projected position $i_p/p_q$ may be computed, as exemplified in Fig. 3a.

From the vectors $\vec{d_1}$, $\vec{d_2}$ and $\vec{e_1}$, multiple descriptor values that are invariant to rotations, translations and/or scalings can be computed. For example, the quotient of the magnitudes of the vectors, $\|\vec{d_1}\|/\|\vec{d_2}\|$ yields a descriptor value invariant to rotation, translation and scaling. Likewise, the vector product of the vectors $\vec{d_1}$ and $\vec{d_2}$, or the vector product of the normalized vectors may be considered. From the vector product of the vectors $\vec{d_1}$ and $\vec{d_2}$ the angle $\alpha$ between the vectors can be calculated, which is also invariant to rotation, translation and scaling.

Fig. 3c and 3d illustrate descriptor value definitions in which the three nearest neighbours of an image/projected position $i_p/p_q$ are taken into account for the calculation. Analogously to the method described above with reference to Fig. 3a and 3b, the three next nearest neighbours of the image/projected position $i_p/p_q$ are identified. Then, the vector $\vec{d_1}$ between the image/projected position $i_p/p_q$ and its nearest neighbour, the vector $\vec{d_2}$ between the image/projected position $i_p/p_q$ and its second nearest neighbour, and the vector $\vec{d_3}$ between the image/projected position $i_p/p_q$ and its third nearest neighbour are computed. Furthermore, the vector $\vec{e_1}$ between the nearest neighbour and the second nearest neighbour of the image/projected position $i_p/p_q$, as exemplified in Fig. 3c, may be computed. It is also possible to compute a vector $\vec{e_2}$ (not shown) between the second nearest neighbour and the third nearest neighbour of the image/projected position $i_p/p_q$.

From these vectors, various invariant descriptor values may be calculated. Nonlimiting examples for suitable descriptor values are

$$\frac{\|\vec{d_2}\|}{\|\vec{d_1}\|}; \frac{\vec{d_2} \cdot \vec{d_2}}{\vec{d_1} \cdot \vec{d_1}}; \vec{d_1} \cdot \vec{d_2}; \frac{\vec{d_1}}{\|\vec{d_1}\|} \cdot \frac{\vec{d_2}}{\|\vec{d_2}\|}; \vec{d_1} \times \vec{d_2}; \frac{\vec{d_1}}{\|\vec{d_1}\|}$$
$$\times \frac{\vec{d_2}}{\|\vec{d_2}\|}; \sin^{-1}\left(\left\|\frac{\vec{d_1}}{\|\vec{d_1}\|} \times \frac{\vec{d_2}}{\|\vec{d_2}\|}\right\|\right); \cos^{-1}\left(\frac{\vec{d_1}}{\|\vec{d_1}\|} \cdot \frac{\vec{d_2}}{\|\vec{d_2}\|}\right);$$

$$\frac{\|\vec{d_3}\|}{\|\vec{d_1}\|}; \frac{\vec{d_3} \cdot \vec{d_3}}{\vec{d_1} \cdot \vec{d_1}}; \vec{d_1} \cdot \vec{d_3}; \frac{\vec{d_1}}{\|\vec{d_1}\|} \cdot \frac{\vec{d_3}}{\|\vec{d_3}\|}; \vec{d_1} \times \vec{d_3}; \frac{\vec{d_1}}{\|\vec{d_1}\|}$$
$$\times \frac{\vec{d_3}}{\|\vec{d_3}\|}; \sin^{-1}\left(\left\|\frac{\vec{d_1}}{\|\vec{d_1}\|} \times \frac{\vec{d_3}}{\|\vec{d_3}\|}\right\|\right); \cos^{-1}\left(\frac{\vec{d_1}}{\|\vec{d_1}\|} \cdot \frac{\vec{d_3}}{\|\vec{d_3}\|}\right);$$

$$\frac{\|\vec{d_3}\|}{\|\vec{d_2}\|}; \frac{\vec{d_3} \cdot \vec{d_3}}{\vec{d_2} \cdot \vec{d_2}}; \vec{d_2} \cdot \vec{d_3}; \frac{\vec{d_2}}{\|\vec{d_2}\|} \cdot \frac{\vec{d_3}}{\|\vec{d_3}\|}; \vec{d_2} \times \vec{d_3}; \frac{\vec{d_2}}{\|\vec{d_2}\|}$$
$$\times \frac{\vec{d_3}}{\|\vec{d_3}\|}; \sin^{-1}\left(\left\|\frac{\vec{d_2}}{\|\vec{d_2}\|} \times \frac{\vec{d_3}}{\|\vec{d_3}\|}\right\|\right); \cos^{-1}\left(\frac{\vec{d_2}}{\|\vec{d_2}\|} \cdot \frac{\vec{d_3}}{\|\vec{d_3}\|}\right);$$

$$\frac{\|\vec{e_1}\|}{\|\vec{d_1}\|}; \frac{\vec{e_1} \cdot \vec{e_1}}{\vec{d_1} \cdot \vec{d_1}}; \vec{d_1} \cdot \vec{e_1}; \frac{\vec{d_1}}{\|\vec{d_1}\|} \cdot \frac{\vec{e_1}}{\|\vec{e_1}\|}; \vec{d_1} \times \vec{e_1}; \frac{\vec{d_1}}{\|\vec{d_1}\|}$$
$$\times \frac{\vec{e_1}}{\|\vec{e_1}\|}; \sin^{-1}\left(\left\|\frac{\vec{d_1}}{\|\vec{d_1}\|} \times \frac{\vec{e_1}}{\|\vec{e_1}\|}\right\|\right); \cos^{-1}\left(\frac{\vec{d_1}}{\|\vec{d_1}\|} \cdot \frac{\vec{e_1}}{\|\vec{e_1}\|}\right);$$

From the normalized vector product $\frac{\vec{d_1}}{\|\vec{d_1}\|} \times \frac{\vec{d_2}}{\|\vec{d_2}\|}$, the angle $\alpha$ between the vectors $\vec{d_1}$ and $\vec{d_2}$ may be calculated as a numerical value for the descriptor of the image/projected position $i_p/p_q$. Analogously, the angle $\beta$ between the vectors $\vec{d_2}$ and $\vec{d_3}$, and the angle $\gamma$ between the vectors $\vec{d_1}$ and $\vec{d_3}$ can be calculated as a numerical value of the descriptor of the image/projected position $i_p/p_q$ from the respective normalized vector or scalar products.

Matching based on descriptors may be performed as follows. First, one image position $i_p$ and one projected position $p_q$ are selected. Then, a descriptor $d_{ip}$ for the image position $i_p$ and a descriptor $d_{pq}$ for the projected position $p_q$ are calculated, wherein the descriptor $d_{ip}$ and the descriptor $d_{pq}$ contain the same set of descriptor values, e.g. both contain the descriptor values $\|\vec{d_2}\|/\|\vec{d_1}\|$, $\vec{d_1} \times \vec{d_3}$ and ( $\frac{\vec{d_2}}{\|\vec{d_2}\|} \times \frac{\vec{d_3}}{\|\vec{d_3}\|}$ )

The descriptor $d_{ip}$ and the descriptor $d_{pq}$ are compared by calculating the differences between the respective descriptor values. If the differences of all descriptor values lie below a respective predetermined threshold, a match is confirmed. Otherwise, it is determined that the image position $i_p$ and the projected position $p_q$ are no match, and a new pair of image position and projected position is selected for matching.

Fig. 4a and 4b illustrate additional descriptor value definitions that may be used if visual features 2 of varying size are present. In addition to the descriptor values described above, it is possible to take into account the size of the visual representations of the visual features 2 from which the image positions $i_p$ are determined into account for the calculation of the descriptor $d_{ip}$. Analogously, if the 3D model 30 contains information on the size of the visual features 2, this information may be taken into account for the calculation of the descriptor $d_{pq}$ of the projected positions $p_q$. Fig. 4a and 4b illustrate the size $s_0$ relating to the selected image/projected position $i_p/p_q$ and the sizes $s_1$, $s_2$, $s_3$ of the three next nearest neighbours. In order to accomplish invariance to scaling, it is preferable to use ratios of sizes as descriptor values, e.g. the value $s_0/s_2$.

Fig. 4c illustrates the utilization of size relations for performing a size-aware determination of closest neighbours. After an image/projected position $i_p/p_q$ is selected, the image/projected position's nearest neighbour is identified as the nearest neighbour whose visual representation (in the case of an image position $i_p$) or projection size (in the case of a projected position $p_q$) has a specific size relation with regard to $i_p/p_q$. In the example of Fig. 4c, only visual features whose image representation or projection has a size $s_0$ approximately equal to the size $s_0$ of the selected image/projected position $i_p/p_q$ are taken into account for the determination of the closest neighbour (highlighted in Fig. 4c by the vector $\overrightarrow{d_1}$) and second closest neighbour (highlighted in Fig. 4c by the vector $\overrightarrow{d_2}$). Visual features with a different size relation relative to the selected image/projected position $i_p/p_q$ are not taken into account. In the example of Fig. 4c, two image/projected positions with sizes $s_1$ and $s_2$ differing substantially from the size $s_0$ of the selected image/projected position $i_p/p_q$ are not taken into account for the determination of closest and second closest neighbour, although their Euclidean distance to the selected image/projected position $i_p/p_q$ is smaller than the distance of the size-aware closest and second closest neighbour.

Matching may be iteratively performed until a predetermined number of matches has been confirmed. When a predetermined number of matches has been confirmed, matching may be terminated.

If a higher robustness against ambiguous matching is desired, corroboration can be performed after a predetermined number of matches has been found. In this case, a set of the matched image positions $i_a$, $i_b$, ..., $i_c$ and a corresponding set of the matched projected positions $p_x$, $p_y$, ..., $p_z$ is formed. Preferably, each set contains two or more positions. Then, a (first) transformation T that transforms the set of matched image positions $i_a$, $i_b$, ..., $i_c$ into the set of matched projected positions $p_x$, $p_y$, ..., $p_z$ is determined. Subsequently, the transformation T is iteratively applied to unmatched image positions $i_d$ to obtain refined image positions $i_dT$. For each refined image position $i_dT$, it is investigated whether the refined image position $i_dT$ lies sufficiently close to a projected position $p_d$. This investigation can be performed, for example, by identifying the projected position closest to the refined image position $i_dT$ and checking whether the distance between them lies below a predetermined threshold.

If it is decided that the refined image position $i_dT$ lies sufficiently close to a projected position $p_d$, a corroboration count is incremented by 1. In this way, corroboration continues until, either, a predetermined corroboration count is reached or exceeded. If this is the case, corroboration is affirmative, so that the match from which the transformation T for the corroboration has been determined is confirmed. If the corroboration count does not reach or exceed the predetermined corroboration count after transformation of all image positions, the match is discarded and matching resumes with the selection of a new pair of image position and projected position for matching.

When corroboration is affirmative, it is possible to identify to which projected positions $p_j$ and, thus, to which landmarks $l_j$ the matched image positions $i_j$ correspond. Then, the position of the camera 10 and the object 1 can be determined based on the information contained in the landmarks $l_j$ identified in the 3D model 30 by the matching process.

In the description of the corroboration, the determination of a (first) transformation T for transforming image positions to projected positions has been described. It is also possible to perform corroboration in an inverse manner, by determining a (second) transformation $T^{-1}$ that transforms matched projected positions $p_x$, $p_y$, ..., $p_z$ into the respective matched image positions $i_a$, $i_b$, ..., $i_c$. In this case, the corroboration is performed by applying the transformation $T^{-1}$ to projected positions $p_d$ and investigating whether the refined projected position $p_dT^{-1}$ lies sufficiently close to an image position $i_d$.

According to another possible embodiment of the matching process, after estimating the orientation of the camera 10, a pair of one image position $i_p$ and one landmark $l_q$ is selected. Next, the image position $i_r$ closest to the selected image position $i_p$ is determined. If the positioning system is configured to support visual features of different sizes, a size relation of the image representations corresponding to $i_p$ and $i_r$ may be calculated. Alternatively, size relation can be a priori known if $i_r$ is chosen as the position of closest visual feature representation to $i_p$ that is of specific size relative to the visual feature representation corresponding to $i_p$, for example, roughly the same size as the visual feature representation corresponding to $i_p$. Further, based on the information available in the 3D model 30, the closest neighbour $l_s$ of the selected landmark $l_q$ is identified. If the size relation of the selected image position $i_p$ and its closest neighbour has been calculated, this size relation can be taken into account when identifying the closest neighbour $l_s$ of the selected landmark $l_q$ (size-aware selection of closest landmark neighbour). Optionally, $i_r$ can be selected as the image position closest to $i_p$ whose image representation corresponds to a specific size relative to the image representation $i_p$, for example, roughly of the same size as the image representation of $i_p$.

Based on these selections of image positions $i_p$, $i_r$ and landmarks $l_q$, $l_s$, the positioning system is configured to find an orientation/pose of the camera 10 at which the landmarks $l_q$ and $l_s$ are projected into projected positions $p_q$ and $p_s$, respectively, such that $p_q$ corresponds to $i_p$ and $p_s$ corresponds to $i_r$.

In order to establish that desired orientation/pose of the camera 10, the originally estimated orientation of the camera 10 is combined with a (third) transformation $T_2$ that preferably consists of a translation and a roll rotation (i.e. a rotation around the vector representing the estimated orientation of the camera 10). The two correspondences between $i_p$ and $p_q$ and between $i_r$ and $p_s$ uniquely determine the (third) transformation $T_2$. Once the transformation $T_2$ is determined, it is applied to the estimated orientation of the camera 10 to enable the definition of a refined virtual image plane.

Matching can then directly proceed with the corroboration step. Yet unmatched landmarks, i.e. landmarks representing yet unmatched projected positions (i.e. all projected positions except $p_q$ and $p_s$) are selected from the 3D model 30 and projected to see whether the resulting projected position will correspond to any of yet unmatched image positions. In the context of this embodiment, it can be beneficial to pick the yet unmatched landmarks closest to $l_q$ first, because it is reasonable to expect that the landmarks that are close to each other in the 3D model 30 will also be close to each other in a set of projected 2D positions and thus have the highest probability to lie within the camera's field of view that is represented by the captured image from which the image positions $i_1$, ..., $i_n$ have been determined.

Since this embodiment of the matching process takes into account the distribution of neighbouring image/projected positions of the selected image position $i_p$ and the projected position $p_q$ corresponding to the selected landmark $l_q$, this matching process may also be regarded as a descriptor-based matching process. That is, the determination of the third transformation $T_2$ that is decisive for the described matching process is determined based on $i_p$ and $i_r$ and selected landmark/projected position $l_q/p_q$ and neighbouring landmark/projected position $l_s/p_s$. The determination of these closest neighbours, that optionally includes the calculation of size relations, is equivalent to the calculation of a descriptor that characterizes the selected image position $i_p$ and selected landmark/projected position $l_q/p_q$ by their respective closest neighbour.

Alternatively, instead of picking $l_s$ as the closest (size-aware) landmark based on the distances in the 3D model 30, it is possible to project multiple landmarks that are closest to $l_q$ in the 3D model 30, thus producing a set of projected points $p_{s1}$, $p_{s2}$, .... The closest (size-aware) projected position to the projected position $p_q$ can then be selected from the set $p_{s1}$, $p_{s2}$, .... In case of significant differences in the depth of the landmarks, this approach can yield better matching performance.

As mentioned earlier, in some embodiments of the positioning system and corresponding method, the virtual image plane may be defined based on the position of the visual features 2 stored in the 3D model 30, or as a plane perpendicular to the direction of gravity. This definition of the virtual plane is particularly useful if the visual features lie far away from the object 1 and the camera 10. According to one embodiment, the orientation of the virtual image plane is determined by fitting an auxiliary plane to the positions of the visual features 2 stored in the 3D model, e.g. by a least square fit to the positions of the visual features 2. The virtual image plane is then defined as a plane parallel to or identical with the auxiliary plane.

This definition of the auxiliary plane may be understood as the determination of a common plane on which the visual features 2 approximately lie. If the visual features 2 are located above the positioning system at a great distance, the fitting of the auxiliary plane may be replaced by defining the virtual image plane as a plane perpendicular to the direction of gravity. This corresponds to the assumption that the visual features 2 are located approximately at the same height.

If this type of definition is used for the virtual image plane, the orientation of the image plane of the camera 10 on which the image positions $i_1$, ..., $i_n$ lie may substantially deviate from the orientation of the virtual image plane. In this case, it is preferred to unskew the image positions $i_1$, ..., $i_n$ in order to improve the performance of the matching process. Unskewing essentially designates the determination and application of a transformation S that transforms the positions of the image positions $i_1$, ..., $i_n$ to unskewed image positions $i'_1$, ..., $i'_n$ that would have been obtained if the orientation of the camera 10 had been orthogonal to the virtual image plane.

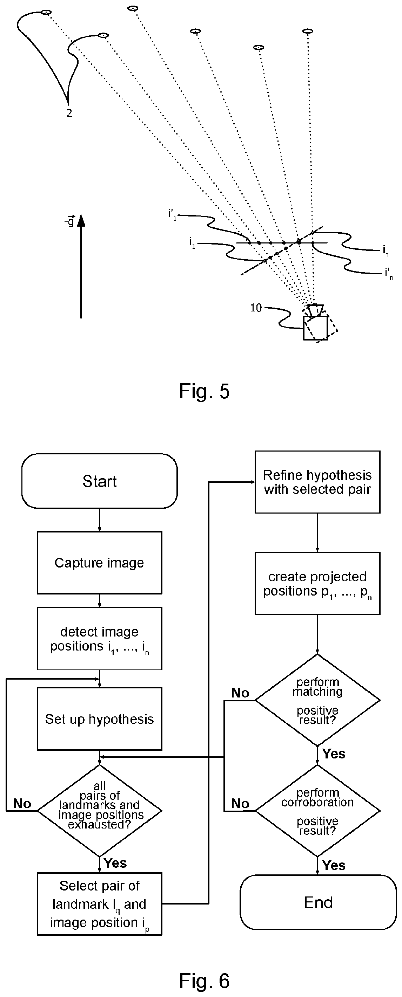

Fig. 5 schematically illustrates the unskewing process. Visual features 2 located above the camera 10 are captured by the camera 10. The orientation of the camera 10 is indicated by broken lines. The corresponding image plane of the camera 10 is indicated by a dashed line. Image positions $i_1$, ..., $i_n$ corresponding to image representations of the visual features 2 captured in the image of the camera 10 are indicated by hollow circles. Based on the estimated orientation of the camera 10, the image positions $i_1$, ..., $i_n$ can be unskewed by determining an unskewing transformation S that represents the transformation of the estimated orientation of the camera 10 to the direction that is perpendicular to the virtual image plane. The transformation S is used to unskew the image positions $i_1$, ..., $i_n$. The unskewed image positions $i'_1$, ..., $i'_n$ are denoted as filled circles in Fig. 5. The unskewed plane on which the unskewed image positions $i'_1$, ..., $i'_n$ are located is indicated as solid line. The unskewed image positions $i'_1$, ..., $i'_n$ thus correspond to image positions that would have been obtained if the orientation of the camera 10 had been perpendicular to the virtual image plane (which, in the case of Fig. 5, is oriented horizontally, perpendicular to the direction of gravity $\vec{g}$). Matching will then be performed with the unskewed image positions $i'_1$, ..., $i'_n$ and the projected positions $p_1$, ..., $p_n$.

According to some embodiments of the positioning system and corresponding method, the distance between the visual features 2 captured in the image of the camera 10 and the camera 10 is taken into consideration at the generation of the projected positions $p_1, ..., p_n$. The image captured by the camera 10 is used to detect and determine the image positions $i_1, ..., i_n$. However, no depth information is derivable from the captured image. When defining the virtual image plane, the estimated orientation of the camera 10 is taken into account (or, if unskewing is used, the orientation of the camera 10 is taken into account for the unskewing, which is equivalent to taking the orientation of the camera 10 into account for the definition of the virtual image plane, since unskewing represents the transformation of the assumed orientation of the camera 10 to the orientation of the virtual image plane).

The distance between the camera 10 and the visual features 2 also substantially affects the relative positions of the image representations of the visual features 2 in the captured image, especially if the visual features 2 are not located at a great distance from the camera 10. In such cases, it may be beneficial to estimate the depth of the visual features 2 whose image representation is contained in the captured image. The definition of the virtual image plane may then take into account the estimated depth, i.e. the estimated distance between the visual features 2 captured in the image of the camera 10 and the camera 10. Exemplary suitable means for estimating the depth or distance between the visual features 2 captured in the image of the camera 10 and the camera 10 are described in the general part of the description.

Based on the above explanations, a sequence of method steps for determining the position of the object 1 according to an embodiment of the positioning system and corresponding method will be described under reference to Fig. 6.

The method starts with the camera 10 capturing an image containing an image representation of at least some of the visual features 2. In the captured image, image positions $i_1, ..., i_n$ of the image representations of the visual features 2 are detected. Further, the orientation of the camera 10 is estimated (this step may be performed before, during or after capturing the image).

Subsequently, a hypothesis is set up. Setting up a hypothesis comprises defining a virtual image plane, and optionally unskewing the image positions $i_1, ..., i_n$. Further optionally, setting up a hypothesis may comprise an estimation of the distance between the visual features 2 captured in the image and the camera 10.

Next, a pair consisting of a landmark $l_q$ from the 3D model 30 and an image position $i_p$ is selected. Assuming that the selected landmark $l_q$ and the selected image position $i_p$ correspond to the same visual feature 2, an assumption on the position of the camera 10 is implicitly made: if the selected landmark $l_q$ and the selected image position $i_p$ correspond to the same visual feature 2, it must be assumed that the camera 10 is located on a line that extends through the position stored in the landmark $l_q$ and the image position $i_p$ on the image plane perpendicular to the assumed orientation of the camera 10. If the depth or distance between the visual features 2 captured in the image of the camera 10 and the camera 10 of the visual features has also been estimated, the position of the camera 10 on said line is also implicitly assumed. Thus, the hypothesis is refined by the selection of the pair of the landmark $l_q$ and the image position $i_p$. Further refinements of the hypothesis may include refining the image positions or projected positions by calculation and application of the transformation $T$ or $T^{-1}$, or by refining the estimation of the camera orientation and/or the definition of the virtual image plane, e.g. by calculating and applying the transformation $T_2$.

Subsequently, the 3D positions of the visual features 2 stored in the landmarks $l_1, ..., l_n$ of the 3D model 30 are projected onto the virtual image plane to create projected positions $p_1, ..., p_n$. The positioning system performs matching between the (optionally unskewed) image positions $i_1, ..., i_n$ and the projected positions $p_1, ..., p_n$. Matching may comprise the calculation of descriptors as described above. If a predetermined number of matches is found, matching is terminated with a positive result.

Afterwards, corroboration may be performed on the positive matching result. If corroboration also returns a positive result, the visual features 2 captured in the image may be identified in the 3D model 30 based on the match between image positions $i_1, ..., i_n$ and projected positions $p_1, ..., p_n$, and the position of the object 1 may be determined. If the matching process or the corroboration do not return a positive result, the process returns to selecting a new pair of a landmark $l_q$ and an image position $i_p$. If all possible pairs of landmarks $l_q$ and image positions $i_p$ have been selected and matched unsuccessfully, the method returns to setting up a new hypothesis.

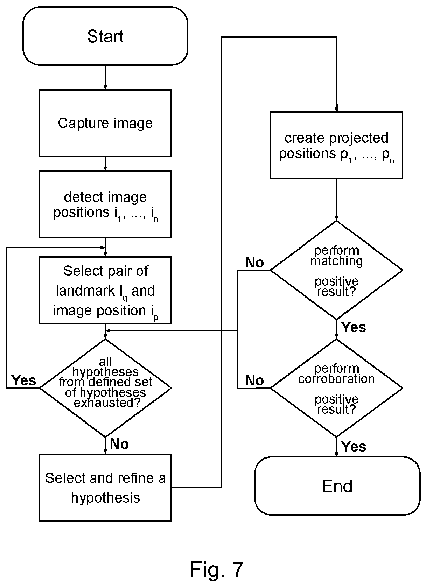

According to an alternative embodiment, the sequence of method steps as shown in Fig. 7 is performed. The steps of the process sequence correspond to those described in relation to Fig. 6. The difference of the method sequence shown in Fig. 7 is that the order of setting up a hypothesis and selecting a pair of a landmark $l_q$ and an image position $i_p$ is reversed. According to this embodiment, multiple hypotheses are tested with the same pair of landmark $l_q$ and image position $i_p$. This sequence of method steps may, for example, be preferable if it is not possible to estimate the depth or distance between the visual features 2 captured in the image of the camera 10 and the camera 10 of the visual features 2 with sufficient reliability. In this case, a set of hypotheses may be set up, wherein the hypotheses differ in the assumption about the depth of the visual features 2. These hypotheses are then successively tested before a new pair of landmark $l_q$ and image position $i_p$ is selected.

As is evident from the above description, the described features and functionalities of the positioning system and corresponding method according to different embodiments of the invention may be combined in different ways, depending on the circumstances in which the positioning system and corresponding method is employed. In order to illustrate this flexibility in more detail, embodiments of the present invention that differ mainly in the setting up of the hypotheses (i.e. the estimation of the camera's orientation, the optional estimation of depth of the visual features 2, the definition of the virtual image plane and the optional unskewing of the image positions $i_1, ...., i_n$) will be described, in order to highlight the advantages obtainable by combining the concepts of the present invention in a suitable manner.

According to a possible embodiment of the invention, the positioning system is configured to capture an image containing image representations of visual features 2, and to detect image positions $i_1, ..., i_n$ corresponding to the visual features 2 captured in the image. Subsequently, an orientation of the camera 10 is estimated, as well as a depth of at least one of the visual features 2 in the image. A pair of a landmark $l_q$ and an image position $i_p$ is selected. The virtual image plane is defined as the image plane of a camera 10 with the estimated orientation and located at the estimated distance from the visual feature 2 corresponding to the landmark $l_q$. Subsequently, matching is performed. If matching is unsuccessful, a new pair of landmark $l_q$ and image position $i_p$ is selected and the process is repeated. If matching is successful, corroboration is optionally performed on the matching result.

Matching may be performed with the use of descriptors, as described earlier, optionally including the use of any of the first, second or third transformation T, $T^{-1}$, $T_2$, or by a pattern matching algorithm.

Alternatively, the camera's roll (i.e. the rotational orientation of the camera 10 around its optical axis) may be estimated and matching may be performed by directly overlapping the projected position $p_q$ corresponding to the selected landmark $l_q$ and the selected image position $i_p$ and checking whether a sufficient number of the remaining image positions $i_n$ lies sufficiently close to a projected position $p_n$. If no match is found, a new estimate for the roll and/or depth is selected and the matching is repeated. This provides a conceptually simple, easily implementable method for position determination.

According to another possible embodiment of the invention, the positioning system is configured to capture an image containing image representations of visual features 2, and to detect image positions $i_1, ..., i_n$ corresponding to the visual features 2 captured in the image. Subsequently, an orientation of the camera 10 is estimated. A plane is fitted to the positions of the visual features 2 stored in the landmarks $l_1, ..., l_n$ of the 3D model 30. This plane is defined as the virtual image plane. Subsequently, the positions of the visual features 2 stored in the landmarks $l_1, ..., l_n$ of the 3D model 30 are orthographically projected onto the fitted plane to obtain the projected positions $p_1, ..., p_n$. The image positions $i_1, ..., i_n$ are unskewed based on an unskewing transformation S that represents the transformation of the estimated orientation of the camera 10 to a vector perpendicular to the virtual image plane. Subsequently, pairwise matching between the unskewed image positions $i'_1, ..., i'_n$ and the projected positions $p_1, ..., p_n$ is performed, preferably with the use of descriptors. Since the projected positions $p_1, ..., p_n$ are obtained by an orthographic projection, the matching and corroboration criteria should not be set too strictly, i.e., a match between unskewed image positions $i'_n$ and projected positions $p_n$ should be confirmed if the differences between the descriptor values and/or the distances during corroboration lie below a relatively large threshold.

This embodiment bears the advantage that the generation of the projected positions $p_1, ..., p_n$ is only performed once. This embodiment is particularly suitable when it may be assumed that the visual features 2 lie approximately on a common plane, and if the camera 10 is located at a great distance from the visual features.

In order to improve the accuracy, the unskewing of the image positions $i_1, ..., i_n$ may be modified by first transforming the image positions $i_1, .., i_n$ such that they form an orthographic projection on the plane whose normal is the camera's optical axis, and then unskewing these modified image positions as described above. This may improve the accuracy and efficiency of the matching process.

According to another possible embodiment of the invention, the positioning system is configured to capture an image containing image representations of visual features 2, and to detect image positions $i_1, ..., i_n$ corresponding to the visual features 2 captured in the image. Subsequently, an orientation of the camera 10 is estimated. A plane is fitted to the positions of the visual features 2 stored in the landmarks $l_1, ..., l_n$ of the 3D model 30. Further, the depth of at least one of the visual features 2 captured in the image is estimated. A pair of a landmark $l_q$ and an image position $i_p$ is selected, and the virtual image plane is defined as a plane parallel to the fitted plane, spaced apart from the fitted plane at a distance corresponding to the estimated depth. The image positions $i_1, ..., i_n$ are unskewed based on an unskewing transformation S that represents the transformation of the estimated orientation of the camera 10 to a vector perpendicular to the virtual image plane. The positions of the visual features 2 stored in the 3D model 30 are projected on the virtual image plane with a perspective projection, wherein the position of the camera 10 is estimated based on the selected pair of landmark $l_q$ and the unskewed image position $i'_p$. Subsequently, matching is performed, preferably with the use of descriptors, and preferably including corroboration.

This embodiment may provide a higher matching accuracy than the previous embodiment, but requires a re-generation of the projected positions for each matching step.

According to another possible embodiment of the invention, the orientation of the camera 10 is estimated by prompting the user to point the camera 10 in an essentially upward direction. When the camera is oriented in this way, the positioning system is configured to capture an image containing image representations of visual features 2, and to detect image positions $i_1, ..., i_n$ corresponding to the visual features 2 captured in the image. The virtual image plane is defined as a plane perpendicular to the direction of gravity.

According to a first alternative, the positions of the visual features 2 stored in the landmarks $l_1$, ..., $l_n$ of the 3D model 30 are orthographically projected onto the fitted plane to obtain the projected positions $p_1$, ..., $p_n$, and matching is performed. According to a second alternative, the depth of the visual features 2 captured in the image is estimated, and the virtual image plane is defined as a plane perpendicular to the direction of gravity, spaced apart from the visual features 2 captured in the image at a distance corresponding to the estimated depth.

Subsequently, matching is performed, preferably with the use of descriptors and corroboration.

This embodiment bears the advantage that the matching accuracy may be greatly improved by limiting the camera's orientation to an essentially upward or downward direction. Further, no unskewing is required. Surprisingly, it has been found that this method is very robust and yields reliable positioning results even if the visual features 2 are not approximately located on a common plane. The method is particularly preferable when the majority of visual features 2 is located above the object 1 at a great distance.

According to a possible modification of some of the embodiments described above, the step of projecting the positions of the visual features 2 stored in the landmarks $l_1$, ..., $l_n$ of the 3D model 30 may be replaced by capturing a plurality of images that are then combined to a larger data structure containing image representations of the visual features 2 that appear in the camera's field of view when capturing the plurality of images. Preferably, the camera 10 is moved around whilst capturing the plurality of images for generating the data structure to capture a larger number of visual features 2. Projected positions $p_1$, ..., $p_n$ of the visual features 2 represented in the data structure can be generated from the data structure by detecting the positions of the visual features 2 represented in the data structure in a manner analogous to the determination of the image positions $i_1$, ..., $i_n$. Thus, according to this modification, the projection of the positions of the visual features 2 stored in the landmarks $l_1$, ..., $l_n$ of the 3D model 30 is performed by obtaining positional information of the visual features 2 from images captured by the camera 10.

## Claims

1. Positioning system for determining the three-dimensional position of a movable object (1), comprising:

   a camera (10) that is attachable to the object at a defined relative position and orientation to the object (1) and is configured to capture an image containing image representations of at least a part of a plurality of visual features (2) that are placeable at fixed locations spaced apart from the camera (1),
   storage means (11) for storing a 3D model of the plurality of visual features (2), the 3D model comprising a set of landmarks ($l_1$, $l_2$, ..., $l_n$) for the visual features (2), the landmarks ($l_1$, $l_2$, ..., $l_n$) containing information on the three-dimensional position of the corresponding visual feature (2), and
   computing means (12) that are configured to:

   • detect the positions of image representations of the visual features (2) in the captured image as image positions ($i_1$, $i_2$, ..., $i_n$) of the visual features (2);
   • perform an estimation of the orientation of the camera (10);
   • define a virtual image plane, based on the estimation of the orientation of the camera (10);
   • project the three-dimensional positions of at least a part of the visual features (2) stored in the 3D model onto the virtual image plane to create projected positions ($p_1$, $p_2$, ..., $p_n$) of the visual features (2);
   • perform matching between the image positions ($i_1$, $i_2$, ..., $i_n$) of the visual features (2) and the projected positions ($p_1$, $p_2$, ..., $p_n$) of the visual features (2) to identify the visual features (2) captured in the image;
   • determine the three-dimensional position of the object (1) based on the information on the three-dimensional positions of the visual features (2) identified in the matching process.

2. Positioning system according to claim 1, comprising orientation determining means (13), preferably a gyroscope, an accelerometer and/or a magnetometer, wherein the computing means (12) are configured to perform the estimation of the orientation of the camera (10) based on information obtained from the orientation determining means (13).

3. Positioning system according to claim 1 or 2, wherein the computing means (12) are configured to perform the matching between the image positions ($i_1$, $i_2$, ..., $i_n$) and the projected positions ($p_1$, $p_2$, ..., $p_n$) of the visual features (2) based on descriptors ($d_{in}$) of the image positions ($i_n$) and the descriptors ($d_{pn}$) of the projected positions ($p_n$), wherein the computing means (12) are configured to compute the descriptor ($d_{in}/d_{pn}$) for an image/projected position ($i_n/p_n$) based on the distribution of neighbouring image/projected positions ($i_n/p_n$).

4. Positioning system according to claim 3, wherein the computing means (12) are configured to compute the descriptor

($d_{in}/d_{pn}$) for an image/projected position ($i_n/p_n$) as a set of numerical values, the numerical values comprising at least one of:

$$\frac{\left\|\overrightarrow{d_2}\right\|}{\left\|\overrightarrow{d_1}\right\|}; \frac{\overrightarrow{d_2}\cdot\overrightarrow{d_2}}{\overrightarrow{d_1}\cdot\overrightarrow{d_1}}; \overrightarrow{d_1}\cdot\overrightarrow{d_2}; \frac{\overrightarrow{d_1}}{\left\|\overrightarrow{d_1}\right\|}\cdot\frac{\overrightarrow{d_2}}{\left\|\overrightarrow{d_2}\right\|}; \overrightarrow{d_1}\times\overrightarrow{d_2}; \frac{\overrightarrow{d_1}}{\left\|\overrightarrow{d_1}\right\|}$$
$$\times\frac{\overrightarrow{d_2}}{\left\|\overrightarrow{d_2}\right\|}; \sin^{-1}\left(\left\|\frac{\overrightarrow{d_1}}{\left\|\overrightarrow{d_1}\right\|}\times\frac{\overrightarrow{d_2}}{\left\|\overrightarrow{d_2}\right\|}\right\|\right); \cos^{-1}\left(\frac{\overrightarrow{d_1}}{\left\|\overrightarrow{d_1}\right\|}\cdot\frac{\overrightarrow{d_2}}{\left\|\overrightarrow{d_2}\right\|}\right);$$

$$\frac{\left\|\overrightarrow{d_3}\right\|}{\left\|\overrightarrow{d_1}\right\|}; \frac{\overrightarrow{d_3}\cdot\overrightarrow{d_3}}{\overrightarrow{d_1}\cdot\overrightarrow{d_1}}; \overrightarrow{d_1}\cdot\overrightarrow{d_3}; \frac{\overrightarrow{d_1}}{\left\|\overrightarrow{d_1}\right\|}\cdot\frac{\overrightarrow{d_3}}{\left\|\overrightarrow{d_3}\right\|}; \overrightarrow{d_1}\times\overrightarrow{d_3}; \frac{\overrightarrow{d_1}}{\left\|\overrightarrow{d_1}\right\|}$$
$$\times\frac{\overrightarrow{d_3}}{\left\|\overrightarrow{d_3}\right\|}; \sin^{-1}\left(\left\|\frac{\overrightarrow{d_1}}{\left\|\overrightarrow{d_1}\right\|}\times\frac{\overrightarrow{d_3}}{\left\|\overrightarrow{d_3}\right\|}\right\|\right); \cos^{-1}\left(\frac{\overrightarrow{d_1}}{\left\|\overrightarrow{d_1}\right\|}\cdot\frac{\overrightarrow{d_3}}{\left\|\overrightarrow{d_3}\right\|}\right);$$

$$\frac{\left\|\overrightarrow{d_3}\right\|}{\left\|\overrightarrow{d_2}\right\|}; \frac{\overrightarrow{d_3}\cdot\overrightarrow{d_3}}{\overrightarrow{d_2}\cdot\overrightarrow{d_2}}; \overrightarrow{d_2}\cdot\overrightarrow{d_3}; \frac{\overrightarrow{d_2}}{\left\|\overrightarrow{d_2}\right\|}\cdot\frac{\overrightarrow{d_3}}{\left\|\overrightarrow{d_3}\right\|}; \overrightarrow{d_2}\times\overrightarrow{d_3}; \frac{\overrightarrow{d_2}}{\left\|\overrightarrow{d_2}\right\|}$$
$$\times\frac{\overrightarrow{d_3}}{\left\|\overrightarrow{d_3}\right\|}; \sin^{-1}\left(\left\|\frac{\overrightarrow{d_2}}{\left\|\overrightarrow{d_2}\right\|}\times\frac{\overrightarrow{d_3}}{\left\|\overrightarrow{d_3}\right\|}\right\|\right); \cos^{-1}\left(\frac{\overrightarrow{d_2}}{\left\|\overrightarrow{d_2}\right\|}\cdot\frac{\overrightarrow{d_3}}{\left\|\overrightarrow{d_3}\right\|}\right);$$

$$\frac{\left\|\overrightarrow{e_1}\right\|}{\left\|\overrightarrow{d_1}\right\|}; \frac{\overrightarrow{e_1}\cdot\overrightarrow{e_1}}{\overrightarrow{d_1}\cdot\overrightarrow{d_1}}; \overrightarrow{d_1}\cdot\overrightarrow{e_1}; \frac{\overrightarrow{d_1}}{\left\|\overrightarrow{d_1}\right\|}\cdot\frac{\overrightarrow{e_1}}{\left\|\overrightarrow{e_1}\right\|}; \overrightarrow{d_1}\times\overrightarrow{e_1}; \frac{\overrightarrow{d_1}}{\left\|\overrightarrow{d_1}\right\|}$$
$$\times\frac{\overrightarrow{e_1}}{\left\|\overrightarrow{e_1}\right\|}; \sin^{-1}\left(\left\|\frac{\overrightarrow{d_1}}{\left\|\overrightarrow{d_1}\right\|}\times\frac{\overrightarrow{e_1}}{\left\|\overrightarrow{e_1}\right\|}\right\|\right); \cos^{-1}\left(\frac{\overrightarrow{d_1}}{\left\|\overrightarrow{d_1}\right\|}\cdot\frac{\overrightarrow{e_1}}{\left\|\overrightarrow{e_1}\right\|}\right);$$

wherein. is a vector from the image/projected position ($i_n/p_n$) to the closest image/projected position, $\overrightarrow{d_2}$ is a vector from the image/projected position ($i_n/p_n$) to the second closest image/projected position, $\overrightarrow{d_3}$ is a vector from the image/-projected position ($i_n/p_n$) to the third closest image/projected position, and $\overrightarrow{e_1}$ is a vector from the closest image/-projected position to the second closest image/projected position.

5. Positioning system according to any of the preceding claims, wherein the computing means (12) are configured to perform matching until a predetermined number of image positions ($i_1, i_2, ..., i_n$), preferably three image positions ($i_1, i_2, ..., i_n$), are matched to projected positions ($p_1, p_2, ..., p_n$).

6. Positioning system according to any of the preceding claims, wherein the computing means (12) are configured to

   • determine a first transformation (T) for transforming matched image positions ($i_1, i_2, ..., i_n$) to matched projected positions ($p_1, p_2, ..., p_n$) obtained during the matching between the image positions ($i_1, i_2, ..., i_n$) of the visual features (2) and the projected positions ($p_1, p_2, ..., p_n$) of the visual features (2);
   • apply the first transformation (T) to the image positions ($i_1, i_2, ..., i_n$) of the visual features (2) captured in the image to obtain refined image positions ($i'_1, i'_2, ..., i'_n$);
   • perform matching between the refined image positions ($i'_1, i'_2, ..., i'_n$) of the visual features (2) and the projected positions ($p_1, p_2, ..., p_n$) of the visual features (2) to identify the visual features (2) captured in the image.

7. Positioning system according to any of the preceding claims, wherein the computing means (12) are configured to perform an estimation of the distance between the camera (10) and at least one visual feature (2) whose image representation is contained in the captured image.

8. Positioning system according to claim 7, wherein the computing means (12) are configured to perform the estimation of the distance between the camera (10) and at least one visual feature (2) whose image representation is contained in the captured image based on the average distance between the camera (10) and visual features (2) during previous operation of the positioning system.

9. Positioning system according to claim 7, wherein the computing means (12) are configured to perform the estimation of the distance between the camera (10) and at least one visual features (2) whose image representation is contained in the captured image based on the number of image representations of visual features (2) in the captured image.

10. Positioning system according to any of the preceding claims, wherein the computing means (12) are configured to define a plane perpendicular to the direction of gravity as virtual image plane.

11. Positioning system according to any of the preceding claims, wherein the computing means (12) are configured to perform an unskewing of the image positions ($i_1$, $i_2$, ..., $i_n$) of the visual features (2).

12. Positioning system according to claim 11, wherein the computing means (12) are configured to determine a first unskewing transformation ($S_1$) which transforms the estimated orientation of the camera (10) to a vector orthogonal on the virtual image plane, and wherein the unskewing of the image positions ($i_1$, $i_2$, ..., $i_n$) of the visual features (2) is performed by applying the first unskewing transformation ($S_1$) to the image positions ($i_1$, $i_2$, ..., $i_n$).

13. Positioning system according to claim 11, wherein the computing means (12) are configured to determine a second unskewing transformation ($S_2$) which transforms the estimated orientation of the camera (10) to a vector in the direction or opposite to the direction of gravity, and wherein the unskewing of the image positions ($i_1$, $i_2$, ..., $i_n$) of the visual features (2) is performed by applying the second unskewing transformation ($S_2$) to the image positions ($i_1$, i2, ..., $i_n$),

14. Positioning system according to any of the preceding claims, wherein the computing means (12) are configured to perform a correction of the captured image and/or the image positions ($i_1$, $i_2$, ..., $i_n$) of the visual features (2) for lens distortions of the camera (10).

15. Computer-implemented method for determining the three-dimensional position of a movable object (1), the method comprising:

   a) receiving an image captured by a camera (10) with a known position and/or orientation relative to the object (1), the image containing image representations of at least a part of a plurality of visual features (2) that are placeable at fixed locations spaced apart from the object (1),
   b) detecting the positions of image representations of the visual features (2) in the captured image as image positions ($i_1$, $i_2$, ..., $i_n$) of the visual features (2);
   c) performing an estimation of the orientation of the camera (10);
   d) defining a virtual image plane, based on the estimation of the orientation of the camera (10);
   e) projecting three-dimensional positions of at least a part of the visual features (2) stored in a 3D model (30) onto the virtual image plane to create projected positions ($p_1$, $p_2$, ..., $p_n$) of the visual features (2), the 3D model (30) comprising a set of landmarks ($l_1$, $l_2$, ..., $l_n$) for the visual features (2), the landmarks ($l_1$, $l_2$, ..., $l_n$) containing information on the three-dimensional position of the corresponding visual feature (2);
   f) performing matching between the image positions ($i_1$, $i_2$, ..., $i_n$) of the visual features (2) and the projected positions ($p_1$, $p_2$, ..., $p_n$) of the visual features (2) to identify the visual features (2) captured in the image;
   g) determining the three-dimensional position of the object (1) based on the information on the three-dimensional positions of the visual features (2) identified in the matching process.

**Patentansprüche**

1. Positionierungssystem zur Bestimmung der dreidimensionalen Position eines beweglichen Objekts (1), umfassend:

   eine Kamera (10), die an dem Objekt in einer definierten relativen Position und Orientierung zu dem Objekt (1) anbringbar ist und konfiguriert ist, ein Bild zu erfassen, das Bilddarstellungen von mindestens einem Teil einer Vielzahl von visuellen Merkmalen (2) enthält, die an festen, von der Kamera (1) beabstandeten Stellen platzierbar sind,
   Speichermittel (11) zum Speichern eines 3D-Modells der Vielzahl von visuellen Merkmalen (2), wobei das 3D-Modell eine Menge von Orientierungshilfen ($l_1$, $l_2$, ..., $l_n$) für die visuellen Merkmale (2) umfasst, wobei die Orientierungshilfen ($l_1$, $l_2$, ..., $l_n$) Informationen über die dreidimensionale Position des entsprechenden visuellen Merkmals (2) enthalten, und

Rechenmittel (12), die konfiguriert sind, um:

- die Positionen von Bilddarstellungen der visuellen Merkmale (2) in dem erfassten Bild als Bildpositionen ($i_1$, $i_2$, ..., $i_n$) der visuellen Merkmale (2) zu erfassen;
- eine Schätzung der Orientierung der Kamera (10) durchzuführen;
- eine virtuelle Bildebene basierend auf der Schätzung der Orientierung der Kamera (10) zu definieren;
- die dreidimensionalen Positionen zumindest eines Teils der im 3D-Modell gespeicherten visuellen Merkmale (2) auf die virtuelle Bildebene zu projizieren, um projizierte Positionen ($p_1$, $p_2$, ..., $p_n$) der visuellen Merkmale (2) zu erzeugen;
- einen Abgleich zwischen den Bildpositionen ($i_1$, $i_2$, ..., $i_n$) der visuellen Merkmale (2) und den projizierten Positionen ($p_1$, $p_2$, ..., $p_n$) der visuellen Merkmale (2) durchzuführen, um die im Bild erfassten visuellen Merkmale (2) zu identifizieren;
- die dreidimensionale Position des Objekts (1) basierend auf den Informationen über die dreidimensionalen Positionen der im Abgleichprozess identifizierten visuellen Merkmale (2) zu bestimmen.

2. Positionierungssystem gemäß Anspruch 1, umfassend Orientierungsbestimmungsmittel (13), vorzugsweise ein Gyroskop, einen Beschleunigungsmesser und/oder einen Magnetometer, wobei die Rechenmittel (12) konfiguriert sind, die Schätzung der Orientierung der Kamera (10) basierend auf Informationen durchzuführen, die von den Orientierungsbestimmungsmitteln (13) erhalten wurden.

3. Positionierungssystem gemäß Anspruch 1 oder 2, wobei die Rechenmittel (12) konfiguriert sind, den Abgleich zwischen den Bildpositionen ($i_1$, $i_2$, ..., $i_n$) und den projizierten Positionen ($p_1$, $p_2$, ..., $p_n$) der visuellen Merkmale (2) basierend auf Deskriptoren ($d_{in}$) der Bildpositionen ($i_n$) und den Deskriptoren ($d_{pn}$) der projizierten Positionen ($p_n$) durchzuführen, wobei die Rechenmittel (12) konfiguriert sind, den Deskriptor ($d_{in}/d_{pn}$) für eine Bild-/projizierte Position ($i_n/p_n$) basierend auf der Verteilung benachbarter Bild-/projizierter Positionen ($i_n/p_n$) zu berechnen.

4. Positionierungssystem gemäß Anspruch 3, wobei die Rechenmittel (12) konfiguriert sind, den Deskriptor ($d_{in}/d_{pn}$) für eine Bild-/projizierte Position ($i_n/p_n$) als eine Menge von numerischen Werten zu berechnen, die numerischen Werte umfassend mindestens eines von:

$$\frac{\|\vec{d_2}\|}{\|\vec{d_1}\|} ; \frac{\vec{d_2} \cdot \vec{d_2}}{\vec{d_1} \cdot \vec{d_1}} ; \vec{d_1} \cdot \vec{d_2} ; \frac{\vec{d_1}}{\|\vec{d_1}\|}$$

$$\cdot \frac{\vec{d_2}}{\|\vec{d_2}\|} ; \vec{d_1} \times \vec{d_2} ; \frac{\vec{d_1}}{\|\vec{d_1}\|} \times \frac{\vec{d_2}}{\|\vec{d_2}\|} ; \sin^{-1}\left(\left\|\frac{\vec{d_1}}{\|\vec{d_1}\|} \times \frac{\vec{d_2}}{\|\vec{d_2}\|}\right\|\right) ; \cos^{-1}\left(\frac{\vec{d_1}}{\|\vec{d_1}\|} \cdot \frac{\vec{d_2}}{\|\vec{d_2}\|}\right) ;$$

$$\frac{\|\vec{d_3}\|}{\|\vec{d_1}\|} ; \frac{\vec{d_3} \cdot \vec{d_3}}{\vec{d_1} \cdot \vec{d_1}} ; \vec{d_1} \cdot \vec{d_3} ; \frac{\vec{d_1}}{\|\vec{d_1}\|}$$

$$\cdot \frac{\vec{d_3}}{\|\vec{d_3}\|} ; \vec{d_1} \times \vec{d_3} ; \frac{\vec{d_1}}{\|\vec{d_1}\|} \times \frac{\vec{d_3}}{\|\vec{d_3}\|} ; \sin^{-1}\left(\left\|\frac{\vec{d_1}}{\|\vec{d_1}\|} \times \frac{\vec{d_3}}{\|\vec{d_3}\|}\right\|\right) ; \cos^{-1}\left(\frac{\vec{d_1}}{\|\vec{d_1}\|} \cdot \frac{\vec{d_3}}{\|\vec{d_3}\|}\right) ;$$

$$\frac{\|\vec{d_3}\|}{\|\vec{d_2}\|} ; \frac{\vec{d_3} \cdot \vec{d_3}}{\vec{d_2} \cdot \vec{d_2}} ; \vec{d_2} \cdot \vec{d_3} ; \frac{\vec{d_2}}{\|\vec{d_2}\|}$$

$$\cdot \frac{\vec{d_3}}{\|\vec{d_3}\|} ; \vec{d_2} \times \vec{d_3} ; \frac{\vec{d_2}}{\|\vec{d_2}\|}$$

$$\times \frac{\vec{d_3}}{\|\vec{d_3}\|} ; \sin^{-1}\left(\left\|\frac{\vec{d_2}}{\|\vec{d_2}\|} \times \frac{\vec{d_3}}{\|\vec{d_3}\|}\right\|\right) ; \cos^{-1}\left(\frac{\vec{d_2}}{\|\vec{d_2}\|} \cdot \frac{\vec{d_3}}{\|\vec{d_3}\|}\right) ;$$

$$\frac{\|\vec{e_1}\|}{\|\vec{d_1}\|}; \frac{\vec{e_1} \cdot \vec{e_1}}{\vec{d_1} \cdot \vec{d_1}}; \; \vec{d_1} \cdot \vec{e_1}; \; \frac{\vec{d_1}}{\|\vec{d_1}\|}$$

$$\cdot \frac{\vec{e_1}}{\|\vec{e_1}\|}; \; \vec{d_1} \times \vec{e_1}; \frac{\vec{d_1}}{\|\vec{d_1}\|}$$

$$\times \frac{\vec{e_1}}{\|\vec{e_1}\|}; \; \sin^{-1}\left(\left\|\frac{\vec{d_1}}{\|\vec{d_1}\|} \times \frac{\vec{e_1}}{\|\vec{e_1}\|}\right\|\right); \cos^{-1}\left(\frac{\vec{d_1}}{\|\vec{d_1}\|} \cdot \frac{\vec{e_1}}{\|\vec{e_1}\|}\right);$$

wobei $\vec{d_1}$ ein Vektor von der Bild-/projizierten Position ($i_n/p_n$) zur nächsten Bild-/projizierten Position, $\vec{d_2}$ ein Vektor von der Bild-/projizierten Position ($i_n/p_n$) zur zweitnächsten Bild-/projizierten Position, $\vec{d_3}$ ein Vektor von der Bild-/projizierten Position ($i_n/p_n$) zur drittnächsten Bild-/projizierten Position und $\vec{e_1}$ ein Vektor von der nächsten Bild-/projizierten Position zur zweitnächsten Bild-/projizierten Position ist.

5. Positionierungssystem gemäß einem der vorstehenden Ansprüche, wobei die Rechenmittel (12) konfiguriert sind, einen Abgleich durchzuführen, bis eine vorbestimmte Anzahl von Bildpositionen ($i_1$, $i_2$, ..., $i_n$), vorzugsweise drei Bildpositionen ($i_1$, $i_2$, ..., $i_n$), mit projizierten Positionen ($p_1$, $p_2$, ..., $p_n$) abgeglichen sind.

6. Positionierungssystem gemäß einem der vorstehenden Ansprüche, wobei die Rechenmittel (12) dazu konfiguriert sind:

- eine erste Transformation (T) zum Transformieren von abgeglichenen Bildpositionen ($i_1$, $i_2$, ..., $i_n$) in abgeglichene projizierte Positionen ($p_1$, $p_2$, ..., $p_n$) zu bestimmen, die während des Abgleichens zwischen den Bildpositionen ($i_1$, $i_2$, ..., $i_n$) der visuellen Merkmale (2) und den projizierten Positionen ($p_1$, $p_2$, ..., $p_n$) der visuellen Merkmale (2) erhalten wurden;
- die erste Transformation (T) auf die Bildpositionen ($i_1$, $i_2$, ..., $i_n$) der in dem Bild erfassten visuellen Merkmale (2) anzuwenden, um verfeinerte Bildpositionen ($i'_1$, $i'_2$, ..., $i'_n$) zu erhalten;
- einen Abgleich zwischen den verfeinerten Bildpositionen ($i'_1$, $i'_2$, ..., $i'_n$) der visuellen Merkmale (2) und den projizierten Positionen ($p_1$, $p_2$, ..., $p_n$) der visuellen Merkmale (2) durchzuführen, um die im Bild erfassten visuellen Merkmale (2) zu identifizieren.

7. Positionierungssystem gemäß einem der vorstehenden Ansprüche, wobei die Rechenmittel (12) konfiguriert sind, eine Schätzung des Abstands zwischen der Kamera (10) und mindestens einem visuellen Merkmal (2), dessen Bilddarstellung in dem erfassten Bild enthalten ist, durchzuführen.

8. Positionierungssystem gemäß Anspruch 7, wobei die Rechenmittel (12) konfiguriert sind, die Schätzung des Abstands zwischen der Kamera (10) und mindestens einem visuellen Merkmal (2), dessen Bilddarstellung in dem erfassten Bild enthalten ist, basierend auf dem durchschnittlichen Abstand zwischen der Kamera (10) und den visuellen Merkmalen (2) während des vorherigen Betriebs des Positionierungssystems durchzuführen.

9. Positionierungssystem gemäß Anspruch 7, wobei die Rechenmittel (12) konfiguriert sind, die Schätzung des Abstands zwischen der Kamera (10) und mindestens einem visuellen Merkmal (2), dessen Bilddarstellung in dem erfassten Bild enthalten ist, basierend auf der Anzahl der Bilddarstellungen von visuellen Merkmalen (2) in dem erfassten Bild durchzuführen.

10. Positionierungssystem nach einem der vorstehenden Ansprüche, wobei die Rechenmittel (12) konfiguriert sind, eine Ebene senkrecht zur Schwerkraftrichtung als virtuelle Bildebene zu definieren.

11. Positionierungssystem nach einem der vorstehenden Ansprüche, wobei die Rechenmittel (12) konfiguriert sind, eine Entzerrung der Bildpositionen ($i_1$, $i_2$, ..., $i_n$) der visuellen Merkmale (2) durchzuführen.

12. Positionierungssystem gemäß Anspruch 11, wobei die Rechenmittel (12) konfiguriert sind, eine erste Entzerrungstransformation ($S_1$) zu bestimmt, die die geschätzte Orientierung der Kamera (10) in einen Vektor orthogonal auf der virtuellen Bildebene transformiert, und wobei die Entzerrung der Bildpositionen ($i_1$, $i_2$, ..., $i_n$) der visuellen Merkmale (2) durch Anwenden der ersten Entzerrungstransformation ($S_1$) auf die Bildpositionen ($i_1$, $i_2$, ..., $i_n$) erfolgt.

13. Positionierungssystem gemäß Anspruch 11, wobei die Rechenmittel (12) konfiguriert sind, eine zweite Entzer-

rungstransformation ($S_2$) zu bestimmen, die die geschätzte Orientierung der Kamera (10) in einen Vektor in der Richtung oder entgegengesetzt zur Schwerkraftrichtung transformiert, und wobei die Entzerrung der Bildpositionen ($i_1$, $i_2$, ..., $i_n$) der visuellen Merkmale (2) durch Anwenden der zweiten Entzerrungstransformation ($S_2$) auf die Bildpositionen ($i_1$, $i_2$, ..., $i_n$) erfolgt.

14. Positionierungssystem gemäß einem der vorstehenden Ansprüche, wobei die Rechenmittel (12) konfiguriert sind, eine Korrektur des erfassten Bildes und/oder der Bildpositionen ($i_1$, $i_2$, ..., $i_n$) der visuellen Merkmale (2) für Linsenverzerrungen der Kamera (10) durchzuführen.

15. Computerimplementiertes Verfahren zur Bestimmung der dreidimensionalen Position eines beweglichen Objekts (1), das Verfahren umfassend:

a) Empfangen eines von einer Kamera (10) erfassten Bildes mit einer bekannten Position und/oder Orientierung relativ zu dem Objekt (1), wobei das Bild Bilddarstellungen zumindest eines Teils einer Vielzahl von visuellen Merkmalen (2), die an festen, von dem Objekt (1) beabstandeten Stellen platzierbar sind, enthält,
b) Erfassen der Positionen von Bilddarstellungen der visuellen Merkmale (2) in dem erfassten Bild als Bildpositionen ($i_1$, $i_2$, ..., $i_n$) der visuellen Merkmale (2);
c) Durchführen einer Schätzung der Orientierung der Kamera (10);
d) Definieren einer virtuellen Bildebene basierend auf der Schätzung der Orientierung der Kamera (10);
e) Projizieren dreidimensionaler Positionen zumindest eines Teils der in einem 3D-Modell (30) gespeicherten visuellen Merkmale (2) auf die virtuelle Bildebene, um projizierte Positionen ($p_1$, $p_2$, ..., $p_n$) der visuellen Merkmale (2) zu erzeugen, wobei das 3D-Modell (30) eine Menge von Orientierungshilfen ($l_1$, $l_2$, ..., $l_n$) für die visuellen Merkmale (2) umfasst, wobei die Orientierungshilfen ($l_1$, $l_2$, ..., $l_n$) Informationen über die dreidimensionale Position des entsprechenden visuellen Merkmals (2) enthalten;
f) Durchführen eines Abgleichs zwischen den Bildpositionen ($i_1$, $i_2$, ..., $i_n$) der visuellen Merkmale (2) und den projizierten Positionen ($p_1$, $p_2$, ..., $p_n$) der visuellen Merkmale (2), um die im Bild erfassten visuellen Merkmale (2) zu identifizieren;
g) Bestimmen der dreidimensionalen Position des Objekts (1) basierend auf den Informationen über die dreidimensionalen Positionen der im Abgleichprozess identifizierten visuellen Merkmale (2).

**Revendications**

1. Système de positionnement destiné à déterminer la position tridimensionnelle d'un objet mobile (1), comprenant:

une caméra (10) qui peut être fixée à l'objet selon une position et une orientation relatives définies par rapport à l'objet (1) et qui est configurée pour capturer une image contenant des représentations d'image d'au moins une partie d'une pluralité de caractéristiques visuelles (2) qui peuvent être placées à des emplacements fixes espacés de la caméra (10),
des moyens de stockage (11) destinés à stocker un modèle 3D de la pluralité de caractéristiques visuelles (2), ledit modèle 3D comprenant un ensemble de repères ($l_1$, $l_2$, ..., $l_n$) pour les caractéristiques visuelles (2), les repères ($l_1$, $l_2$, ..., $l_n$) contenant des informations sur la position tridimensionnelle de la caractéristique visuelle correspondante (2), et
des moyens de calcul (12) qui sont configurés pour:

• détecter les positions de représentations d'images des caractéristiques visuelles (2) dans l'image capturée comme positions d'images ($i_1$, $i_2$, ..., $i_n$) des caractéristiques visuelles (2),
• effectuer une estimation de l'orientation de la caméra (10),
• définir un plan d'image virtuel sur la base de l'estimation de l'orientation de la caméra (10),
• projeter les positions tridimensionnelles d'au moins une partie des caractéristiques visuelles (2) stockées dans le modèle 3D sur le plan d'image virtuel afin de créer des positions projetées ($p_1$, $p_2$, ..., $p_n$) des caractéristiques visuelles (2),
• effectuer une mise en correspondance entre les positions d'image ($i_1$, $i_2$, ..., $i_n$) des caractéristiques visuelles (2) et les positions projetées ($p_1$, $p_2$, ..., $p_n$) des caractéristiques visuelles (2) afin d'identifier les caractéristiques visuelles (2) capturées dans l'image,
• déterminer la position tridimensionnelle de l'objet (1) à partir des informations sur les positions tridimensionnelles des caractéristiques visuelles (2) identifiées lors du processus de mise en correspondance.

**2.** Système de positionnement selon la revendication 1, comprenant des moyens de détermination d'orientation (13), de préférence un gyroscope, un accéléromètre et/ou un magnétomètre, dans lequel les moyens de calcul (12) sont configurés pour effectuer l'estimation de l'orientation de la caméra (10) à partir d'informations obtenues à partir des moyens de détermination d'orientation (13).

**3.** Système de positionnement selon la revendication 1 ou 2, dans lequel les moyens de calcul (12) sont configurés pour effectuer la mise en correspondance entre les positions d'image ($i_1$, $i_2$, ..., $i_n$) et les positions projetées ($p_1$, $p_2$, ..., $p_n$) des caractéristiques visuelles (2) à partir de descripteurs ($d_{in}$) des positions d'image ($i_n$) et des descripteurs ($d_{pn}$) des positions projetées ($p_n$), dans lequel les moyens de calcul (12) sont configurés pour calculer le descripteur ($d_{in}/d_{pn}$) pour une position d'image/projetée ($i_n/p_n$) à partir de la distribution de positions d'image/projetées voisines ($i_n/p_n$).

**4.** Système de positionnement selon la revendication 3, dans lequel les moyens de calcul (12) sont configurés pour calculer le descripteur ($d_{in}/d_{pn}$) pour une position d'image/projetée ($i_n/p_n$) en tant qu'ensemble de valeurs numériques, les valeurs numériques comprenant au moins l'une de:

$$\frac{\|\overrightarrow{d_2}\|}{\|\overrightarrow{d_1}\|}; \frac{\overrightarrow{d_2}\cdot\overrightarrow{d_2}}{\overrightarrow{d_1}\cdot\overrightarrow{d_1}}; \overrightarrow{d_1}\cdot\overrightarrow{d_2}; \frac{\overrightarrow{d_1}}{\|\overrightarrow{d_1}\|}$$
$$\cdot\frac{\overrightarrow{d_2}}{\|\overrightarrow{d_2}\|}; \overrightarrow{d_1}\times\overrightarrow{d_2}; \frac{\overrightarrow{d_1}}{\|\overrightarrow{d_1}\|}\times\frac{\overrightarrow{d_2}}{\|\overrightarrow{d_2}\|}; \sin^{-1}\left(\left\|\frac{\overrightarrow{d_1}}{\|\overrightarrow{d_1}\|}\times\frac{\overrightarrow{d_2}}{\|\overrightarrow{d_2}\|}\right\|\right); \cos^{-1}\left(\frac{\overrightarrow{d_1}}{\|\overrightarrow{d_1}\|}\cdot\frac{\overrightarrow{d_2}}{\|\overrightarrow{d_2}\|}\right);$$

$$\frac{\|\overrightarrow{d_3}\|}{\|\overrightarrow{d_1}\|}; \frac{\overrightarrow{d_3}\cdot\overrightarrow{d_3}}{\overrightarrow{d_1}\cdot\overrightarrow{d_1}}; \overrightarrow{d_1}\cdot\overrightarrow{d_3}; \frac{\overrightarrow{d_1}}{\|\overrightarrow{d_1}\|}$$
$$\cdot\frac{\overrightarrow{d_3}}{\|\overrightarrow{d_3}\|}; \overrightarrow{d_1}\times\overrightarrow{d_3}; \frac{\overrightarrow{d_1}}{\|\overrightarrow{d_1}\|}\times\frac{\overrightarrow{d_3}}{\|\overrightarrow{d_3}\|}; \sin^{-1}\left(\left\|\frac{\overrightarrow{d_1}}{\|\overrightarrow{d_1}\|}\times\frac{\overrightarrow{d_3}}{\|\overrightarrow{d_3}\|}\right\|\right); \cos^{-1}\left(\frac{\overrightarrow{d_1}}{\|\overrightarrow{d_1}\|}\cdot\frac{\overrightarrow{d_3}}{\|\overrightarrow{d_3}\|}\right);$$

$$\frac{\|\overrightarrow{d_3}\|}{\|\overrightarrow{d_2}\|}; \frac{\overrightarrow{d_3}\cdot\overrightarrow{d_3}}{\overrightarrow{d_2}\cdot\overrightarrow{d_2}}; \overrightarrow{d_2}\cdot\overrightarrow{d_3}; \frac{\overrightarrow{d_2}}{\|\overrightarrow{d_2}\|}$$
$$\cdot\frac{\overrightarrow{d_3}}{\|\overrightarrow{d_3}\|}; \overrightarrow{d_2}\times\overrightarrow{d_3}; \frac{\overrightarrow{d_2}}{\|\overrightarrow{d_2}\|}$$
$$\times\frac{\overrightarrow{d_3}}{\|\overrightarrow{d_3}\|}; \sin^{-1}\left(\left\|\frac{\overrightarrow{d_2}}{\|\overrightarrow{d_2}\|}\times\frac{\overrightarrow{d_3}}{\|\overrightarrow{d_3}\|}\right\|\right); \cos^{-1}\left(\frac{\overrightarrow{d_2}}{\|\overrightarrow{d_2}\|}\cdot\frac{\overrightarrow{d_3}}{\|\overrightarrow{d_3}\|}\right);$$

$$\frac{\|\overrightarrow{e_1}\|}{\|\overrightarrow{d_1}\|}; \frac{\overrightarrow{e_1}\cdot\overrightarrow{e_1}}{\overrightarrow{d_1}\cdot\overrightarrow{d_1}}; \overrightarrow{d_1}\cdot\overrightarrow{e_1}; \frac{\overrightarrow{d_1}}{\|\overrightarrow{d_1}\|}$$
$$\cdot\frac{\overrightarrow{e_1}}{\|\overrightarrow{e_1}\|}; \overrightarrow{d_1}\times\overrightarrow{e_1}; \frac{\overrightarrow{d_1}}{\|\overrightarrow{d_1}\|}$$
$$\times\frac{\overrightarrow{e_1}}{\|\overrightarrow{e_1}\|}; \sin^{-1}\left(\left\|\frac{\overrightarrow{d_1}}{\|\overrightarrow{d_1}\|}\times\frac{\overrightarrow{e_1}}{\|\overrightarrow{e_1}\|}\right\|\right); \cos^{-1}\left(\frac{\overrightarrow{d_1}}{\|\overrightarrow{d_1}\|}\cdot\frac{\overrightarrow{e_1}}{\|\overrightarrow{e_1}\|}\right);$$

où $\overrightarrow{d_1}$ est un vecteur de la position d'image/projetée ($i_n/p_n$) à la position d'image/projetée la plus proche, $\overrightarrow{d_2}$ est un vecteur de la position d'image/projetée ($i_n/p_n$) à la deuxième position d'image/projetée la plus proche, $\overrightarrow{d_3}$ est un vecteur de la position d'image/projetée ($i_n/p_n$) à la troisième position d'image/projetée la plus proche, et $\overrightarrow{e_1}$ est un vecteur de la position d'image/projetée la plus proche à la deuxième position d'image/projetée la plus proche.

**5.** Système de positionnement selon l'une quelconque des revendications précédentes, dans lequel les moyens de calcul (12) sont configurés pour effectuer une mise en correspondance jusqu'à ce qu'un nombre prédéterminé de

positions d'image ($i_1$, $i_2$, ..., $i_n$), de préférence trois positions d'image ($i_1$, $i_2$, ..., $i_n$), correspondent à des positions projetées ($p_1$, $p_2$, ..., $p_n$).

6. Système de positionnement selon l'une quelconque des revendications précédentes, dans lequel les moyens de calcul (12) sont configurés pour:

- déterminer une première transformation (T) pour transformer des positions d'image correspondantes ($i_1$, $i_2$, ..., $i_n$) en positions projetées correspondantes ($p_1$, $p_2$, ..., $p_n$) obtenues lors de la mise en correspondance entre les positions d'image ($i_1$, $i_2$, ..., $i_n$) des caractéristiques visuelles (2) et les positions projetées ($p_1$, $p_2$, ..., $p_n$) des caractéristiques visuelles (2);
- appliquer la première transformation (T) aux positions d'image ($i_1$, $i_2$, ..., $i_n$) des caractéristiques visuelles (2) capturés dans l'image afin d'obtenir des positions d'image affinées ($i'_1$, $i'_2$, ..., $i'_n$);
- effectuer une mise en correspondance entre les positions d'image affinées ($i'_1$, $i'_2$, ..., $i'_n$) des caractéristiques visuelles (2) et les positions projetées ($p_1$, $p_2$, ..., $p_n$) des caractéristiques visuelles (2) afin d'identifier les caractéristiques visuelles (2) capturées dans l'image.

7. Système de positionnement selon l'une quelconque des revendications précédentes, dans lequel les moyens de calcul (12) sont configurés pour effectuer une estimation de la distance entre la caméra (10) et au moins une caractéristique visuelle (2) dont la représentation d'image est contenue dans l'image capturée.

8. Système de positionnement selon la revendication 7, dans lequel les moyens de calcul (12) sont configurés pour effectuer l'estimation de la distance entre la caméra (10) et au moins une caractéristique visuelle (2) dont la représentation d'image est contenue dans l'image capturée, sur la base de la distance moyenne entre la caméra (10) et des caractéristiques visuelles (2) lors du fonctionnement précédent du système de positionnement.

9. Système de positionnement selon la revendication 7, dans lequel les moyens de calcul (12) sont configurés pour effectuer l'estimation de la distance entre la caméra (10) et au moins une caractéristique visuelle (2) dont la représentation d'image est contenue dans l'image capturée, sur la base du nombre de représentations d'image de caractéristiques visuelles (2) dans l'image capturée.

10. Système de positionnement selon l'une quelconque des revendications précédentes, dans lequel les moyens de calcul (12) sont configurés pour définir un plan perpendiculaire à la direction de la gravité en tant que plan d'image virtuelle.

11. Système de positionnement selon l'une quelconque des revendications précédentes, dans lequel les moyens de calcul (12) sont configurés pour effectuer une correction des positions d'image ($i_1$, $i_2$, ..., $i_n$) des caractéristiques visuelles (2).

12. Système de positionnement selon la revendication 11, dans lequel les moyens de calcul (12) sont configurés pour déterminer une première transformation de correction ($S_1$) qui transforme l'orientation estimée de la caméra (10) en un vecteur orthogonal au plan d'image virtuel, et dans lequel la correction des positions d'image ($i_1$, $i_2$, ..., $i_n$) des caractéristiques visuelles (2) est effectuée en appliquant la première transformation de correction ($S_1$) aux positions d'image ($i_1$, $i_2$, ..., $i_n$).

13. Système de positionnement selon la revendication 11, dans lequel les moyens de calcul (12) sont configurés pour déterminer une deuxième transformation de correction ($S_2$) qui transforme l'orientation estimée de la caméra (10) en un vecteur dans la direction ou dans la direction opposée à la direction de la gravité, et dans lequel la correction des positions d'image ($i_1$, $i_2$, ..., $i_n$) des caractéristiques visuelles (2) est effectuée en appliquant la deuxième transformation de correction ($S_2$) aux positions d'image ($i_1$, $i_2$, ..., $i_n$).

14. Système de positionnement selon l'une quelconque des revendications précédentes, dans lequel les moyens de calcul (12) sont configurés pour effectuer une correction de l'image capturée et/ou des positions d'image ($i_1$, $i_2$, ..., $i_n$) des caractéristiques visuelles (2) pour des distorsions de lentille de la caméra (10).

15. Procédé mis en œuvre par ordinateur, destiné à déterminer la position tridimensionnelle d'un objet mobile (1), le procédé comprenant:

a) recevoir une image capturée par une caméra (10) dont la position et/ou l'orientation par rapport à l'objet (1) sont connues, l'image contenant des représentations d'image d'au moins une partie d'une pluralité de caractéristiques visuelles (2) qui peuvent être placées à des emplacements fixes espacés de l'objet (1),

b) détecter les positions de représentations d'image des caractéristiques visuelles (2) dans l'image capturée comme positions d'images ($i_1$, $i_2$, ..., $i_n$) des caractéristiques visuelles (2),

c) effectuer une estimation de l'orientation de la caméra (10):

d) définir un plan d'image virtuel sur la base de l'estimation de l'orientation de la caméra (10),

e) projeter des positions tridimensionnelles d'au moins une partie des caractéristiques visuelles (2) stockées dans un modèle 3D (30) sur le plan d'image virtuel afin de créer des positions projetées ($p_1$, $p_2$, ..., $p_n$) des caractéristiques visuelles (2), le modèle 3D (30) comprenant un ensemble de repère ($l_1$, $l_2$, ..., $l_n$) pour les caractéristiques visuelles (2), les repères ($l_1$, $l_2$, ..., $l_n$) contenant des informations sur la position tridimensionnelle de la caractéristique visuelle correspondante (2);

f) effectuer une mise en correspondance entre les positions d'image ($i_1$, $i_2$, ..., $i_n$) des caractéristiques visuelles (2) et les positions projetées ($p_1$, $p_2$, ..., $p_n$) des caractéristiques visuelles (2) afin d'identifier les caractéristiques visuelles (2) capturées dans l'image;

g) déterminer la position tridimensionnelle de l'objet (1) à partir des informations sur les positions tridimensionnelles des caractéristiques visuelles (2) identifiées lors du processus de mise en correspondance.

Fig. 1

Fig. 2

Fig. 3a

Fig. 3b

Fig. 3c

Fig. 3d

Fig. 4a

Fig. 4b

Fig. 4c

Fig. 5

Fig. 6

Start

Capture image

detect image
positions $i_1, ..., i_n$

Select pair of
landmark $l_q$ and
image position $i_p$

all
hypotheses
from defined set
of hypotheses
exhausted?

**Yes**

**No**

Select and refine a
hypothesis

create projected
positions $p_1, ..., p_n$

perform
matching

positive
result?

**No**

**Yes**

perform
corroboration

positive
result?

**No**

**Yes**

End

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018145291 A1

**Non-patent literature cited in the description**

- **ANDREW J. DAVISON**. *Real-Time Simultaneous Localisation and Mapping with a Single Camera*, 2003
- **H. DURRANT-WHYTE**. *Simultaneous localization and mapping: part I*
- **T. BAILEY**. *Simultaneous localization and mapping (SLAM): part II*
- **GU et al.** *A Quick 3D-to-2D Points Matching based on the Perspective Projection*
- **GOLD et al.** *New algorithms for 2D and 3D point matching: Pose Estimation and Correspondence*